# EUROPEAN PATENT APPLICATION

(11) **EP 3 239 850 A1**
(43) Date of publication of application: **01.11.2017**
(21) Application number: 15872145.6
(22) Date of filing: 18.11.2015
(51) Int. Cl.: G06F 13/00, H04M 1/00, H04M 11/00

(54) **COMMUNICATION TERMINAL, CONTENT DELIVERY SYSTEM, CONTENT DELIVERY METHOD, AND COMMUNICATION TERMINAL CONTROL PROGRAM**

(30) Priority: 25.12.2014 JP 2014262061
(71) Applicant: NEC Corporation, Tokyo 108-8001 (JP)
(72) Inventor: OGURA, Kazumine, Tokyo 108-8001 (JP); YAMASAKI, Yasuhiro, Tokyo 108-8001 (JP)
(74) Representative: MacDougall, Alan John Shaw
(86) International application number: PCT/JP2015/005752
(87) International publication number: WO 2016/103567

(57) **Abstract**

A content delivery method enabling a communication terminal to acquire a content held by a passing communication terminal with a lightened communication load between the communication terminals is provided as follows in the present invention. The content delivery method according to the present invention includes storing a content and a content holder list listing a content holder that holds the content, in a mutually associated manner, receiving an external signal, detecting a neighboring communication terminal, and outputting a terminal identifier of the neighboring communication terminal included in the external signal. The method further includes searching the content holder list in accordance with the terminal identifier, determining a content related to an unsearched content holder list as an unheld content, and outputting the unheld content as a transmitted content, with the terminal identifier as a destination terminal identifier. The method further includes creating, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as a transmission terminal identifier, and transmitting the created message as a content information message to the neighboring communication terminal.

## Description

### Technical Field

The present invention relates to a communication terminal, a content delivery system, a content delivery method, and a communication terminal control program.

### Background Art

It has become a significant problem that, when a collapse or malfunction of a base station occurs in a case of a disaster, a large-scale network failure occurs in a cellular system that represents a mobile communication system today. Consequently, significance of an ad hoc network as a new mobile communication system has been recognized. Specifically, a technology called delay/disruption tolerant networking (DTN) that enables communication even when a communication route is intermittent is particularly drawing attention.

DTN is a communication technology assuming an unstable communication environment in which terminals move around and communication is intermittent. A mainstream technology in DTN is epidemic routing (NPL 1) that repeats replication of a content with respect to a passing terminal to deliver the content to a target terminal in a communication environment in which continuous communication cannot be expected.

The epidemic routing has a feature of a local terminal transmitting a list of held contents called a summary vector (hereinafter abbreviated as SV) to a passing terminal. Specifically, the epidemic routing delivers a content to a target terminal by the following procedure.

First, when detecting a passing terminal, a local terminal transmits an SV to the passing terminal. The terminal receiving the SV compares the SV with a content held by the local terminal and notifies a list of contents not held by the local terminal (hereinafter referred to as an unheld content) to the transmission terminal transmitting the SV. The terminal receiving the unheld content list transmits an unheld content in the remote terminal by referring to the unheld content list. Thus, a held content can be shared between terminals in the epidemic routing. As described above, in the epidemic routing technology, a terminal replicates a content every time the terminal passes another terminal to deliver the content to a destination terminal by the aforementioned processing.

PTL 1 discloses a data transfer device with DTN. Specifically, in a technology in PTL 1, information indicating a directly communicable node (hereinafter referred to as a direct node) and routing information indicating a route to a node being indirectly communicable through a direct node (hereinafter referred to as an indirect node) are stored. In the technology in PTL 1, when another node is encountered, routing information held by the node is acquired, and routing data in a local node are updated. In the technology in PTL 1, when another node is detected, routing data are updated, and whether or not data can be transmitted to another node is controlled by using the updated routing data.

PTL 2 discloses an information sharing system with a communication device constituting an ad hoc network. In a technology in PTL 2, information held by another communication device is estimated in accordance with a reception history of SVs received from the communication device. In the technology in PTL 2, whether or not the estimated information held by the communication terminal matches information held by a local terminal is determined, and, when the information does not match, an SV including the information held by the local terminal is transmitted.

### Citation List

### Patent Literature

PTL 1: Japanese Unexamined Patent Application Publication No. 2011-199677 (pp. 6 to 9, Figs. 1 and 2)
PTL 2: International Application Publication No. WO 2011/071045 (pp. 7 to 10, Figs. 1 to 4)

### Non Patent Literature

NPL 1: A. Vahdat and D. Becker, "Epidemic routing for partially connected ad hoc networks," Duke Tech Report CS-2000-06, 2000

### Summary of Invention

### Technical Problem

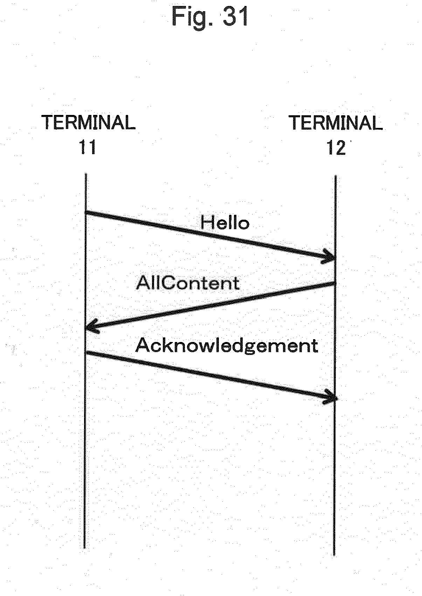

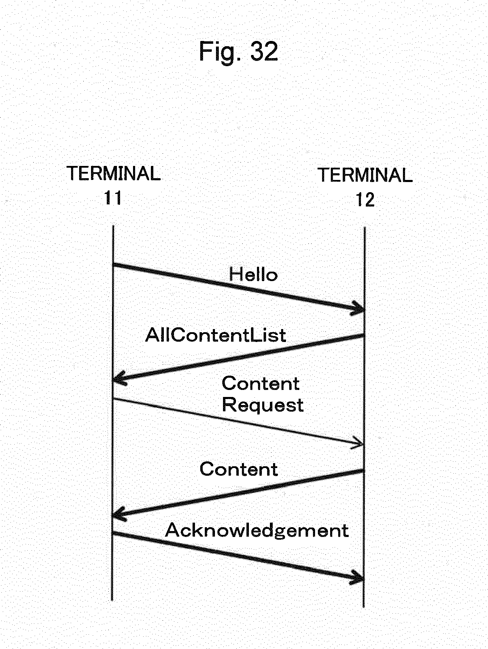

Push-type and pull-type content acquisition methods will be described as content acquisition means using an SV in epidemic routing. Fig. 31 is a sequence diagram exemplifying a push-type content acquisition method using an SV. Fig. 32 is a sequence diagram exemplifying a pull-type content technique using an SV. Referring to Figs. 31 and 32, each content acquisition method will be described.

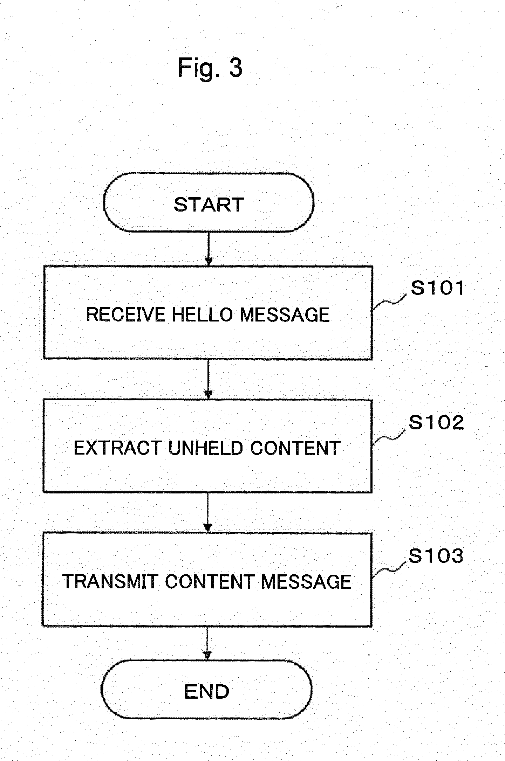

In Fig. 3 1, a terminal 11 transmits a Hello message to a terminal 12. The Hello message has a role of letting the terminal 11 cause the terminal 12 to detect existence of the local terminal (terminal 11). The terminal 12 transmits all contents (All Content) held by the terminal 12 to the terminal 11. Consequently, the terminal 11 acquires all the contents held by the terminal 12. Finally, the terminal 11 returns an Acknowledgement message (hereinafter referred to as a confirmatory response message) for notification of reception completion of the contents, to the terminal 12.

In Fig. 32, a terminal 11 transmits a Hello message to a terminal 12. The terminal 12 transmits a list of all contents (All Content List) held by the terminal 12 to the terminal 11. The terminal 11 transmits a list of requested contents (Content Request) out of the list of all the contents, to the terminal 12. The terminal 12 transmits a content (Content) listed in the received content list to the terminal 11. Consequently, the terminal 11 is able to acquire the content held by the terminal 12. The terminal 11 returns a confirmatory response message notifying reception completion of the content to the terminal 12.

Thus, in either of the push-type or pull-type content acquisition method with epidemic routing, a content held by a terminal passing a local terminal can be acquired from the terminal. However, in either method, all contents or a content list of all contents is transmitted between the terminals in the first information exchange.

Consequently, the epidemic routing technology has the following two problems. A first one is that, with respect to a terminal encountered more than once, all contents or an all-content list is transmitted at each encounter. The reason is that a local terminal transmits a content or a content list including the content to a passing terminal again in spite of having transmitted the content or the list in the past.

A second problem is that, when passing a terminal without a direct encounter in the past, a local terminal transmits, to the passing terminal, a content unnecessary for the terminal or a content list of contents unnecessary for the terminal. The reason is that the local terminal transmits, to the passing terminal, a content already held by the terminal or a content list including a content already held by the terminal.

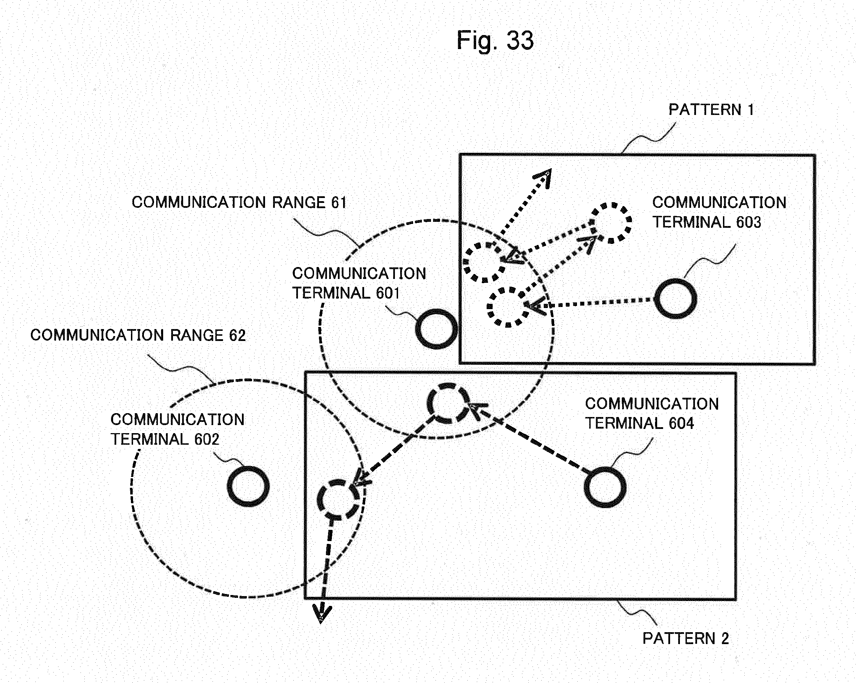

Fig. 33 is a diagram exemplifying a communication network. In Fig. 33, the aforementioned two problems will be described, taking up two patterns that will also be used in subsequent description as examples.

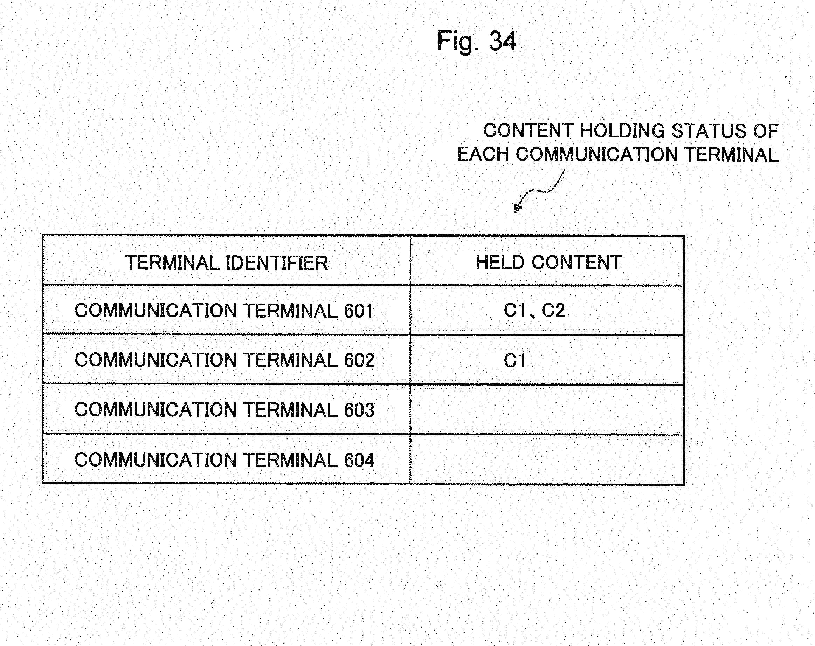

In Fig. 33, four communication terminals 601 to 604 exist. Fig. 34 is an explanatory diagram exemplifying status of a content held by each communication terminal at this time.

A communication range 61 indicates a distance enabling mutual communication with the communication terminal 601. A communication range 62 indicates a distance enabling mutual communication with the communication terminal 602. A pattern 1 in which the communication terminal 603 moves and a pattern 2 in which the communication terminal 604 moves will be described.

In the pattern 1, the communication terminal 603 moves to encounter the communication terminal 601, then repeats leaving the communication range 61 and subsequently entering the communication range 61 again. In the pattern 2, the communication terminal 604 moves to encounter the communication terminal 601, then leaves the communication range 61, and subsequently encounters the communication terminal 602.

The first problem in the aforementioned epidemic routing technology is increasing a communication load between communication terminals by transmitting a content or a content list at each encounter with respect to a communication terminal encountered more than once.

Specifically, in the pattern 1 in which the communication terminal 603 moves, the push-type content acquisition method illustrated in Fig. 31 will be described as an example. When the communication terminal 603 enters the communication range 61, the communication terminal 601 receives a Hello message from the communication terminal 603. The communication terminal 601 transmits all held contents C1 and C2 to the terminal 603. When the communication terminal 603 leaves the communication range 61 and subsequently enters the communication range 61 again, the communication terminal 601 receives a Hello message from the communication terminal 603 again. The communication terminal 601 receiving the Hello message from the communication terminal 603 transmits all the locally held contents C1 and C2 to the communication terminal 603 again. Consequently, a communication load (a transmission count of a content) between the communication terminals increases. The push-type content acquisition method is discussed here. However, even in the pull-type content acquisition method in Fig. 32, each terminal transmits a content list related to all contents to one another at each encounter. Consequently, a communication load (a transmission count of a content list) between the communication terminals similarly increases. This is the first problem related to the epidemic routing.

The second problem in the epidemic routing technology is, when passing a terminal without a direct encounter in the past, transmitting an unnecessary content or a content list of the content to the passing remote communication terminal. Consequently, in the epidemic routing technology, a communication load between communication terminals increases.

Specifically, in the pattern 2 in which the communication terminal 604 moves, the pull-type content acquisition method in Fig. 32 will be described as an example. When the communication terminal 604 enters the communication range 61, the communication terminal 601 receives a Hello message from the communication terminal 604. The communication terminal 601 transmits a content list of all held contents C1 and C2 to the communication terminal 604. The communication terminal 604 transmits a content list of locally unheld contents C1 and C2 to the communication terminal 601 as a content request. The communication terminal 601 transmits the requested contents C1 and C2 to the communication terminal 604.

Next, the communication terminal 604 leaves the communication range 61, then enters the communication range 62, and receives a Hello message from the communication terminal 202. The communication terminal 604 receiving the Hello message from the communication terminal 602 transmits a content list of all locally held contents to the communication terminal 602 in spite of the communication terminal 602 already holding the content C2. Consequently, a communication load (a size of a content list) between the communication terminals increases. The pull-type content acquisition method is discussed here. However, even in the push-type content acquisition method in Fig. 31, the communication terminal 604 transmits the contents of the locally held contents C1 and C2, and therefore a communication load (a total size of contents) between the communication terminals similarly increases. This is the second problem related to the epidemic routing.

The aforementioned two problems related to the epidemic routing are common to both the push-type and pull-type content acquisition methods. That is to say, there is a problem related to the epidemic routing technology, that a communication load increases between a local terminal and a passing communication terminal.

The technology in PTL 1 controls whether or not data can be transmitted, in accordance with routing data related to a direct node or an indirect node, and therefore suppresses data transmission to another node not included in the routing data. Accordingly, when a destination node of data is included in the routing data, the technology in PTL 1 is able to transmit the data to a node having a route to the destination node in accordance with the routing data, and suppress data transmission to an unnecessary node. However, the technology in PTL 1 has a problem that the data cannot be transmitted to the destination when a node having routing data including the destination node of the data is not encountered, or the data for the destination node are transmitted to all encountered nodes. In other words, the technology in PTL 1 has a problem of either failing to transmit data to a destination node, or increasing a communication load between nodes by transmitting data to all encountered nodes regardless of whether or not the node holds the data.

In the technology in PTL 2, information held by another communication terminal is estimated from a reception history of SVs received from the communication terminal, and, when the information matches locally held information, an SV of a local terminal is transmitted. However, in the technology in PTL 2, the SV of the local terminal includes a list of information estimated to be held by the other communication terminal. Consequently, the technology in PTL 2 has a problem of increasing a communication load between communication terminals by transmitting an SV including a list of information held by or estimated to be held by a remote communication terminal.

The present invention is made in view of such problems. An object of the present invention is to provide a communication terminal, a content communication system, a content communication method, and a communication terminal control program that enable a communication terminal to acquire a content held by a passing communication terminal, with a lightened communication load between the communication terminals.

### Solution to Problem

A communication terminal according to the present invention includes:
a content DB that stores a content and a content holder list listing a content holder that holds the content, in a mutually associated manner;
a neighboring terminal detection means that receives an external signal, detects a neighboring communication terminal, and outputs a terminal identifier of the neighboring communication terminal included in the external signal;
a content transmission determination means that searches the content holder list in accordance with the terminal identifier, determines a content related to an unsearched content holder list as an unheld content, and outputs the unheld content as a transmitted content, with the terminal identifier as a destination terminal identifier; and
a content information transmission-reception means that creates, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as a transmission terminal identifier, and transmits the created message as a content information message to the neighboring communication terminal.

A content delivery method according to the present invention includes:
storing a content and a content holder list listing a content holder that holds the content, in a mutually associated manner;
receiving an external signal, detecting a neighboring communication terminal, and outputting a terminal identifier of the neighboring communication terminal included in the external signal;
searching the content holder list in accordance with the terminal identifier, determining a content related to an unsearched content holder list as an unheld content, and outputting the unheld content as a transmitted content, with the terminal identifier as a destination terminal identifier; and
creating, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as a transmission terminal identifier, and transmitting the created message as a content information message to the neighboring communication terminal.

A communication terminal control program according to the present invention causes a computer of a communication terminal including a content DB that stores a content and a content holder list listing a content holder that holds the content, in a mutually associated manner, to operate as:
a neighboring terminal detection means that receives an external signal, detects a neighboring communication terminal, and outputs a terminal identifier of the neighboring communication terminal included in the external signal;
a content transmission determination means that searches the content holder list in accordance with the terminal identifier, determines a content related to an unsearched content holder list as an unheld content, and outputs the unheld content as a transmitted content, with the terminal identifier as a destination terminal identifier; and
a content information transmission-reception means that creates, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as a transmission terminal identifier, and transmits the created message as a content information message to the neighboring communication terminal. Advantageous Effects of Invention

The present invention enables a communication terminal to acquire a content held by a passing communication terminal, with a lightened communication load between the communication terminals.

### Brief Description of Drawings

Fig. 1 is a block diagram illustrating a configuration example of a communication terminal according to a first example embodiment of the present invention.
Fig. 2 is a diagram illustrating a configuration example of a content DB according to the first example embodiment of the present invention.
Fig. 3 is a flowchart illustrating an operation example of the communication terminal according to the first example embodiment of the present invention when a neighboring communication terminal is detected.
Fig. 4 is a flowchart illustrating an operation example of the communication terminal according to the first example embodiment of the present invention when a content message is received.
Fig. 5 is a flowchart illustrating an operation example of the communication terminal according to the first example embodiment of the present invention when a confirmatory response message is received.
Fig. 6 is a diagram illustrating an example of information contained in a content DB in a communication terminal 601 in a communication network with the communication terminal according to the first example embodiment of the present invention.
Fig. 7 is a diagram illustrating an example of information contained in the content DB in the communication terminal 601 in the communication network with the communication terminal according to the first example embodiment of the present invention.
Fig. 8 is a sequence diagram illustrating an example of an overall operation of the communication terminal according to the first example embodiment of the present invention in a communication network when a content is acquired.
Fig. 9 is a block diagram illustrating a configuration example of a communication terminal according to a second example embodiment of the present invention.
Fig. 10 is a flowchart illustrating an operation example of the communication terminal according to the second example embodiment of the present invention when a neighboring communication terminal is detected.
Fig. 11 is a flowchart illustrating an operation example of the communication terminal according to the second example embodiment of the present invention when a content message is received.
Fig. 12 is a flowchart illustrating an operation example of the communication terminal according to the second example embodiment of the present invention when a confirmatory response message is received.
Fig. 13 is a flowchart illustrating an operation example of the communication terminal according to the second example embodiment of the present invention when a content holder list message is received.
Fig. 14 is a diagram illustrating an example of information contained in a content DB in a communication terminal 604 in a communication network with the communication terminal according to the second example embodiment of the present invention.
Fig. 15 is a sequence diagram illustrating an example of an overall operation of the communication terminal according to the second example embodiment of the present invention in a communication network when a content is acquired.
Fig. 16 is a block diagram illustrating a configuration example of a communication terminal according to a third example embodiment of the present invention.
Fig. 17 is a flowchart illustrating an operation example of the communication terminal according to the third example embodiment of the present invention when a neighboring communication terminal is detected.
Fig. 18 is a flowchart illustrating an operation example of the communication terminal according to the third example embodiment of the present invention when a content list message is received.
Fig. 19 is a flowchart illustrating an operation example of the communication terminal according to the third example embodiment of the present invention when a content request message is received.
Fig. 20 is a flowchart illustrating an operation example of the communication terminal according to the third example embodiment of the present invention when a content message is received.
Fig. 21 is a flowchart illustrating an operation example of the communication terminal according to the third example embodiment of the present invention when a confirmatory response message is received.
Fig. 22 is a sequence diagram illustrating an example of an overall operation of the communication terminal according to the third example embodiment of the present invention in a communication network when a content is acquired.
Fig. 23 is a block diagram illustrating a configuration example of a communication terminal according to a fourth example embodiment of the present invention.
Fig. 24 is a flowchart illustrating an operation example of the communication terminal according to the fourth example embodiment of the present invention when a neighboring communication terminal is detected.
Fig. 25 is a flowchart illustrating an operation example of the communication terminal according to the fourth example embodiment of the present invention when a content list message is received.
Fig. 26 is a flowchart illustrating an operation example of the communication terminal according to the fourth example embodiment of the present invention when a content request message is received.
Fig. 27 is a flowchart illustrating an operation example of the communication terminal according to the fourth example embodiment of the present invention when a content message is received.
Fig. 28 is a flowchart illustrating an operation example of the communication terminal according to the fourth example embodiment of the present invention when a confirmatory response message is received.
Fig. 29 is a flowchart illustrating an operation example of the communication terminal according to the fourth example embodiment of the present invention when a content holder list message is received.
Fig. 30 is a sequence diagram illustrating an example of an overall operation of the communication terminal according to the fourth example embodiment of the present invention in a communication network when a content is acquired.
Fig. 31 is a sequence diagram illustrating a push-type content acquisition method using an SV in epidemic routing.
Fig. 32 is a sequence diagram illustrating a pull-type content acquisition method using an SV in epidemic routing.
Fig. 33 is a diagram exemplifying a communication network.
Fig. 34 is a diagram exemplifying status of a content held by a communication terminal in a communication network.

### Description of Embodiments

Referring to the drawings, example embodiments according to the present invention will be described in detail below.

### First Example Embodiment

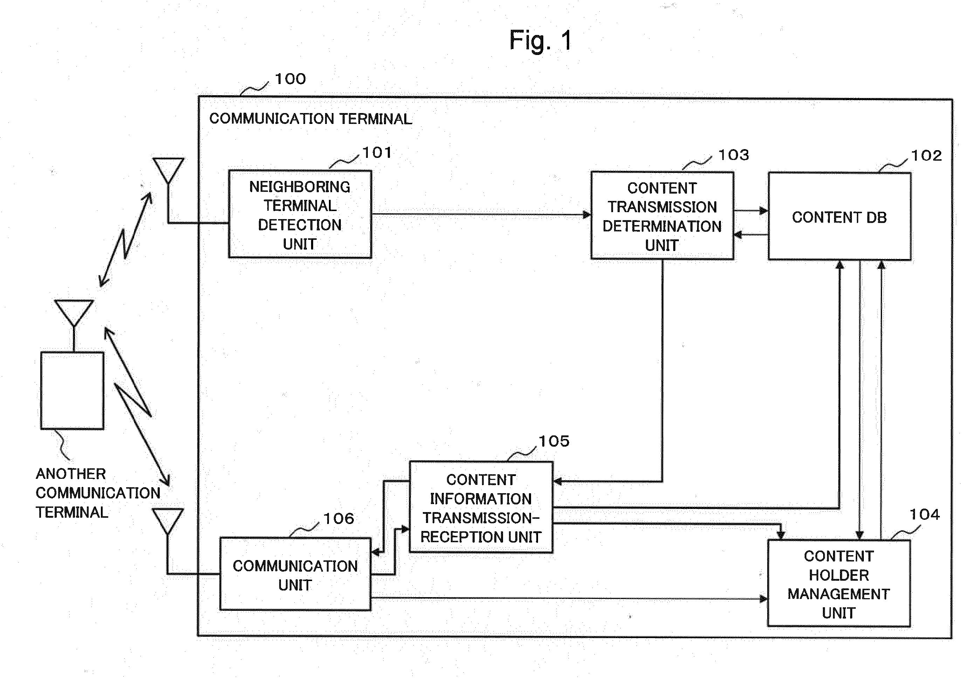

A first example embodiment according to the present invention will be described. Fig. 1 is a block diagram illustrating a configuration example of a communication terminal according to the first example embodiment of the present invention. Referring to Fig. 1, a configuration of the communication terminal 100 according to the present example embodiment will be described.

The communication terminal 100 includes a neighboring terminal detection unit 101, a content DB 102, a content transmission determination unit 103, a content holder management unit 104, a content information transmission-reception unit 105, and a communication unit 106. DB represents a storage unit as a database.

The neighboring terminal detection unit 101 receives a signal including a terminal identifier of another communication terminal from the communication terminal and detects existence of a communicable terminal nearby. When a communicable terminal is detected nearby, the neighboring terminal detection unit 101 outputs a terminal identifier of the detected communication terminal to the content transmission determination unit 103. An example of a signal including a terminal identifier of another communication terminal includes a Hello message transmitted for causing a neighboring communication terminal to confirm existence of a local terminal. It is assumed that the Hello message is a message including information by which a communication terminal transmitting the message can be distinguished. Whether a Hello message is transmitted through a wireless network or a wired network is not considered relevant.

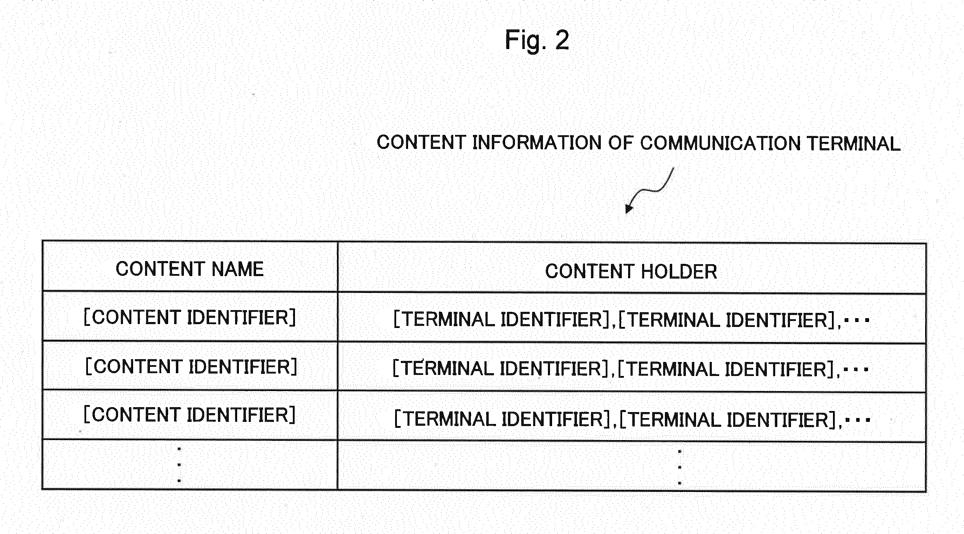

For example, content information of the content DB 102 is structured in a format in Fig. 2. Specifically, the content information of the content DB 102 associates a content identifier with a terminal identifier, and, for each content, stores a terminal identifier of every communication terminal holding the content.

The content transmission determination unit 103 searches the content DB 102 in accordance with a terminal identifier of a communication terminal detected by the neighboring terminal detection unit 101. The content transmission determination unit 103 extracts a content a content holder list of which does not include the terminal identifier of the detected communication terminal, and outputs the extracted content and the terminal identifier of the detected communication terminal to the content information transmission-reception unit 105.

The content holder management unit 104 performs the following determination and processing in accordance with a content identifier and a terminal identifier of a communication terminal respectively from the content information transmission-reception unit 105, and a content identifier and a terminal identifier of a communication terminal respectively from the communication unit 106. Specifically, the content holder management unit 104 determines that a content holder of a content with a matching content identifier increases. In accordance with the determination, the content holder management unit 104 searches the content DB 102 for a content with a matching content identifier and adds the terminal identifier of the communication terminal input to the content holder management unit 104 to a content holder list of the searched content.

The content information transmission-reception unit 105 has two functions. A first function is that, in accordance with a content and a terminal identifier respectively from the content transmission determination unit 103, the content information transmission-reception unit 105 outputs the content identifier and the terminal identifier to the content holder management unit 104. Additionally, the content information transmission-reception unit 105 creates a content message for transmitting the content, with the terminal identifier as a destination, and outputs the created message to the communication unit 106.

A second function is that, in accordance with a content message from the communication unit 106, the content information transmission-reception unit 105 outputs a content and a terminal identifier respectively in the content message to the content holder management unit 104. Additionally, the content information transmission-reception unit 105 causes the content DB 102 to store the content in the content message. The content message is a message including a content, destination information of a destination terminal, and information about a transmission terminal.

Note that the first function of the
content information transmission-reception unit 105 is not an essential function. The function is a function of, when transmitting a content to another terminal, previously adding a destination terminal to a content holder list in the content DB before receiving a confirmatory response message. However, the function is not necessary when the destination terminal is added to the content holder list after receiving the confirmatory response message.

The communication unit 106 has three functions. A first function is receiving a content message from the content information transmission-reception unit 105 and transmitting the content message to a destination communication terminal.

A second function is receiving a content message with a terminal identifier of the local terminal as a destination from another communication terminal, and outputting the content message to the content information transmission-reception unit 105. Additionally, the communication unit 106 transmits a confirmatory response message with a terminal identifier of a transmission terminal of the content as a destination. The confirmatory response message is a message including an identifier of a received content and a terminal identifier of the local terminal, with a terminal identifier of a transmission terminal of the content as a destination.

A third function is receiving a confirmatory response message with a terminal identifier of the local terminal as a destination from another communication terminal, and outputting a content identifier in the confirmatory response message and a terminal identifier of a transmission terminal of the confirmatory response message to the content holder management unit 104.

Figs. 3 to 5 are flowcharts illustrating operation examples of the communication terminal 100 according to the present example embodiment. Referring to Figs. 3 to 5, an operation of the communication terminal 100 will be described.

Fig. 3 is a flowchart illustrating an operation example when a local terminal receives a signal including a terminal identifier from a neighboring communication terminal and detects the neighboring communication terminal. As an operation at the time, the local terminal transmits a content in the local terminal to the neighboring communication terminal only when the neighboring communication terminal is not listed in a content holder list in the content DB in the local terminal. At this time, a terminal identifier of a destination terminal of the content may be added to a content holder list related to the transmitted content in the content DB in the local terminal.

In Fig. 3, the communication terminal 100 detects a neighboring communication terminal by receiving a signal including a terminal identifier such as a Hello message from another communication terminal through the neighboring terminal detection unit 101 (S101).

The neighboring terminal detection unit 101 outputs the detected terminal identifier to the content transmission determination unit 103. The content transmission determination unit 103 extracts a content (unheld content) a content holder list of which does not include the terminal identifier of the neighboring communication terminal from the content DB 102 (S102).

The content transmission determination unit 103 outputs the extracted unheld content and the terminal identifier of the neighboring communication terminal to the content information transmission-reception unit 105. The content information transmission-reception unit 105 creates a content message for transmitting the content, with the terminal identifier of the neighboring communication terminal as a destination, and outputs the created content message to the communication unit 106. The communication unit 106 transmits the content message to the neighboring communication terminal (S103).

At this time, the content information transmission-reception unit 105 outputs the transmitted content identifier and the terminal identifier being the destination to the content holder management unit 104. The content holder management unit 104 searches the content DB 102 for a content matching the content identifier received from the content information transmission-reception unit 105, and adds the terminal identifier being the destination to a content holder list of the searched content. Note that the function may be performed after receiving a confirmatory response message (when completion of the content transmission is confirmed), and therefore is not an essential function.

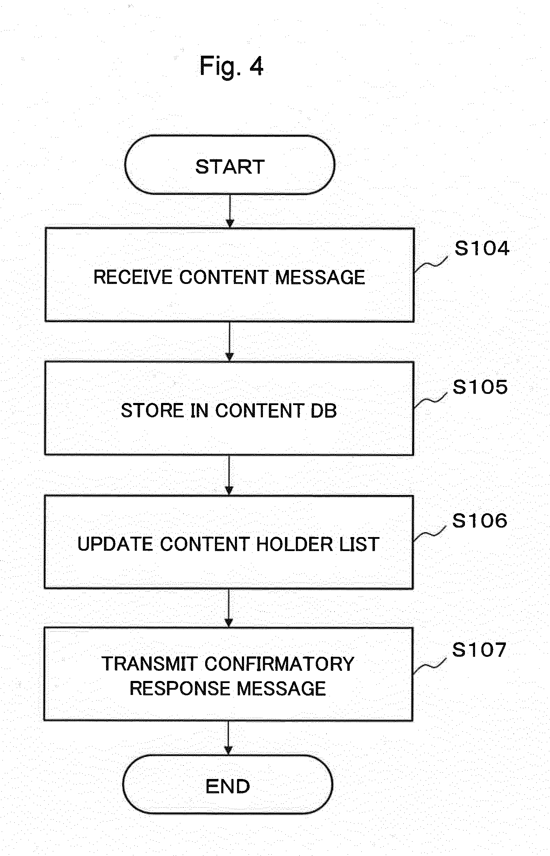

Fig. 4 is a flowchart illustrating an operation example when a local terminal receives a content from a neighboring communication terminal. An operation at the time is to store the received content in the content DB and add a terminal identifier of the local terminal and a terminal identifier of a content transmission terminal to a content holder list of the received content in the content DB. Further, the communication terminal receiving the content may transmit a confirmatory response message to the transmission terminal.

In Fig. 4, the communication unit 106 receives a content message and outputs the received content message to the content information transmission-reception unit 105 (S104). The content information transmission-reception unit 105 causes the content DB 102 to store a received content included in the received content message (S105).

The content information transmission-reception unit 105 outputs a content identifier and the terminal identifier of the content transmission terminal in the content message to the content holder management unit 104. The content holder management unit 104 searches the content DB 102 for the content identifier and adds the terminal identifier of the local terminal and the terminal identifier of the content transmission terminal to a content holder list of the searched content (S106).

The communication unit 106 transmits a confirmatory response message including the content identifier for notification of completion of the content reception, with the terminal identifier of the content transmission terminal as a destination (S107). Note that an execution order of Steps S105, S106, and S107 is not considered relevant.

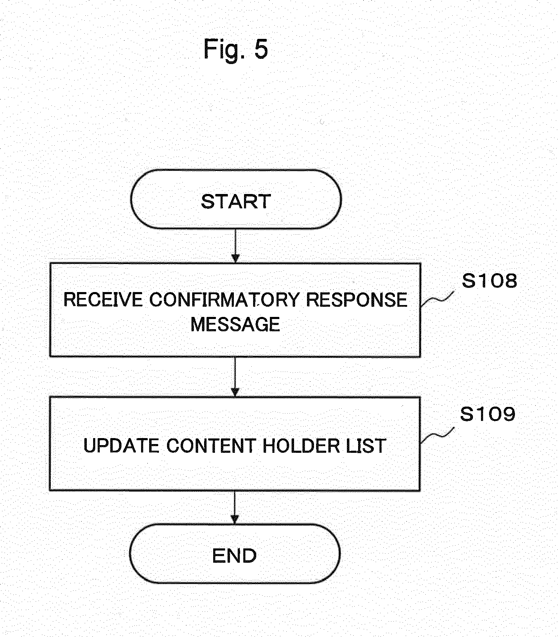

Fig. 5 is a flowchart illustrating an operation example when a local terminal receives a confirmatory response message from a neighboring communication terminal. An operation at the time is to add a terminal identifier of a transmission terminal of the confirmatory response message to a content holder list of a content of which content identifier matches the content identifier included in the confirmatory response message in the content DB.

In Fig. 5, the communication unit 106 receives a confirmatory response message from another communication terminal (S108). The communication unit 106 outputs a content identifier included in the confirmatory response message, reception of the content identifier being completed, and a terminal identifier of a transmission terminal of the confirmatory response message to the content holder management unit 104.

The content holder management unit 104 searches the content DB 102 for a content matching the content identifier reception of which is completed, and adds the terminal identifier of the transmission terminal of the confirmatory response message to a content holder list of the searched content (S109).

Thus, the communication terminal 100 according to the present example embodiment is able to transmit only an unheld content of a passing communication terminal 100 and acquire the content.

An overall operation of a communication network with the communication terminal 100 according to the present example embodiment will be described assuming that the communication terminal 601 to 604 in the communication network in Fig. 33 are communication terminals 100 according to the present example embodiment.

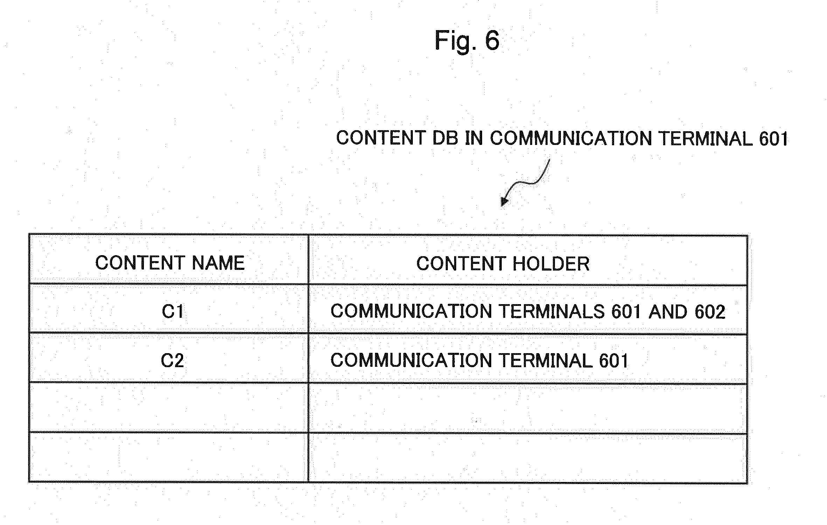

An example of the communication terminal 603 moving in the pattern 1 will be described. When the communication terminal 603 enters the communication range 61 of the communication terminal 601, the communication terminal 603 receives the contents C1 and C2 from the communication terminal 601. In other word, the communication terminal 601 receives a Hello message from the communication terminal 603. The communication terminal 601 determines from content holder lists of C1 and C2 that C1 and C2 are unheld contents of the communication terminal 603 as indicated in Fig. 6, in accordance with a terminal identifier of the communication terminal 603. In accordance with the determination result, the communication terminal 601 transmits C1 and C2 to the communication terminal 603. At that time, the communication terminal 601 receives a confirmatory response message indicating reception completion of C1 and C2 by the communication terminal 603, and adds the communication terminal 603 to the content holder lists of C1 and C2. As a result, the content DB in the communication terminal 601 is updated from Fig. 6 to Fig. 7.

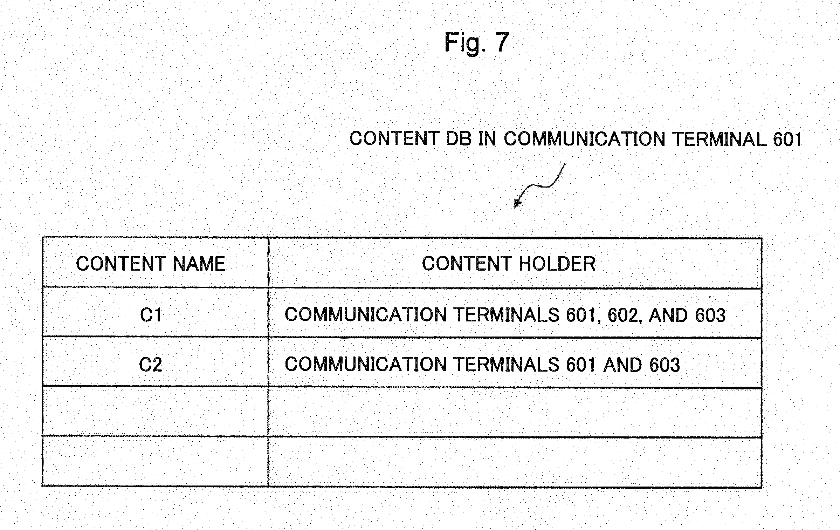

Next, the communication terminal 603 moves out of the communication range 61 and enters the communication range 61 again. At this time, the communication terminal 601 receives a Hello message from the communication terminal 603 again. The identifier of the communication terminal 603 is already listed in the content holder lists of C1 and C2 in the content DB in the communication terminal 601 (referring to Fig. 7), and therefore the communication terminal 601 is able to determine that the communication terminal 603 holds both contents. Accordingly, the communication terminal 601 transmits neither the content C1 nor C2. As a result, a communication terminal according to the present example embodiment is able to suspend transmission of a content held by a remote communication terminal, and lighten a communication load between the communication terminals.

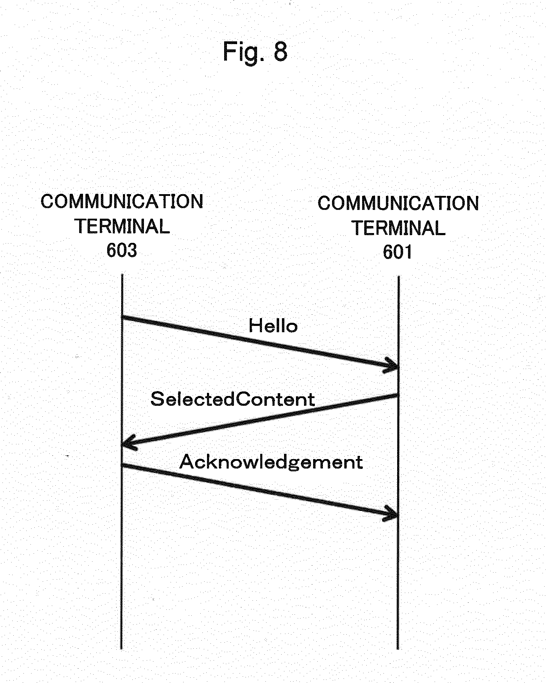

Fig. 8 is a sequence diagram illustrating an operation example of the communication terminal 603 according to the present example embodiment acquiring a content from the communication terminal 601. Compared with the push-type content acquisition method using an SV in Fig. 31, the communication terminal 601 according to the present example embodiment does not transmit a content already held by a remote communication terminal (the communication terminal 603), as described above. Consequently, the present example embodiment is able to suppress unnecessary content transmission and lighten a communication load required for content acquisition between communication terminals.

Thus, the present example embodiment is able to lighten a communication load required for content acquisition, by not transmitting to a communication terminal frequently encountering a local terminal a content already held by the communication terminal. The reason is that, according to the present example embodiment, when transmitting a content, a local terminal records a terminal identifier of a destination terminal as a content holder list of the transmitted content and, when the content is transmitted again, is able to determine whether or not the content has been already transmitted in the past. When the local terminal transmits a content, a terminal identifier of a destination terminal of the content is recorded in a content holder list as a holder of the content. Similarly, when the local terminal receives a content, a terminal identifier of a transmission terminal of the content is recorded in the content holder list as a holder of the content. Accordingly, a communication terminal according to the present example embodiment is able to transmit only an unheld content in accordance with a determination result of whether the content is an unheld content or not.

As described above, the communication terminal according to the present example embodiment suppresses transmission of a content held by a remote communication terminal and transmits only an unheld content, and therefore enables a communication terminal to acquire a content held by a passing communication terminal, with a lightened communication load between the communication terminals.

While the communication terminal according to the present example embodiment has been described to include the content holder management unit, the content holder management unit may not be included. That is to say, it is sufficient that the communication terminal can search the content DB in the local terminal and determine an unheld content of the remote communication terminal using the content information transmission-reception unit in accordance with terminal identification information of a passing communication terminal acquired by detecting the passing communication terminal. In accordance with the determination result, the content information transmission-reception unit transmits an unheld content or an unheld content list of the remote communication terminal to the remote communication terminal. Consequently, the remote communication terminal is able to acquire the unheld content, or return a requested content list based on the unheld content list to acquire the requested content. Thus, only a content determined unheld or a content list thereof is transmitted to the remote communication terminal, and therefore the remote communication terminal is able to acquire the content, with a lightened communication load between the local terminal and the remote communication terminal. Accordingly, the communication terminal according to the present example embodiment may not include the content holder management unit.

Further, the flowcharts and the sequence diagram illustrated in Figs. 3 to 5 and 8 are exemplifications as operation examples of the communication terminal 100 according to the present invention, and an operation of the communication terminal according to the present invention is not limited to the illustrations in the flowcharts and the sequence diagram. Further, a direction of an arrow in the block diagram in Fig. 1 represents an example and does not limit a direction of a signal between blocks. The same applies to the subsequent example embodiments.

### Second Example Embodiment

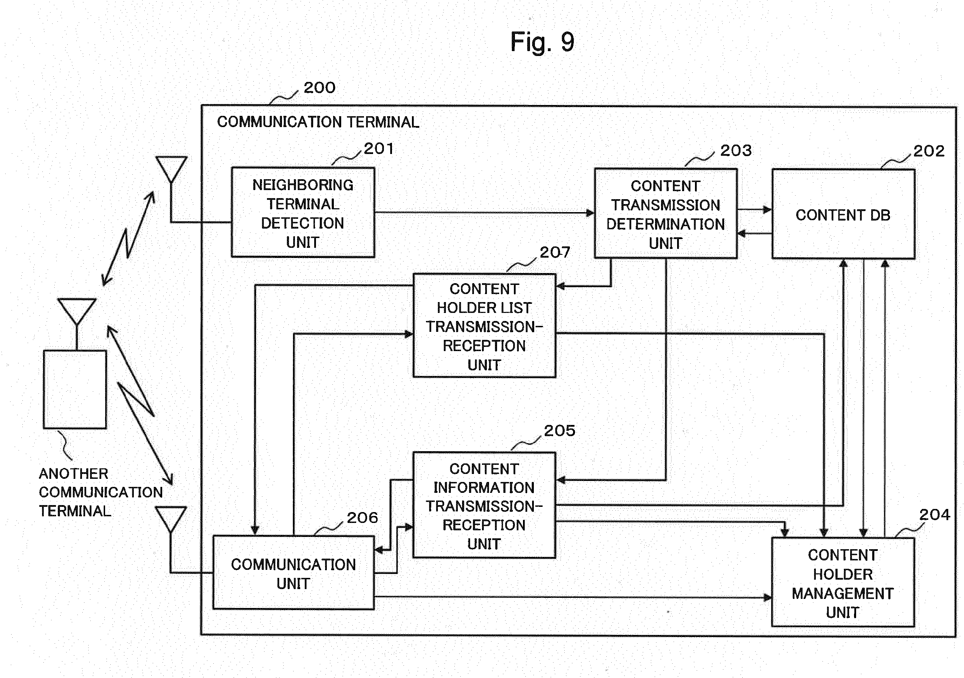

A second example embodiment according to the present invention will be described. Fig. 9 is a block diagram illustrating a configuration example of a communication terminal 200 according to the second example embodiment of the present invention. Referring to Fig. 9, a configuration of the communication terminal 200 according to the present example embodiment will be described.

The communication terminal 200 includes a neighboring terminal detection unit 201, a content DB 202, a content transmission determination unit 203, a content holder management unit 204, a content information transmission-reception unit 205, a communication unit 206, and a content holder list transmission-reception unit 207.

The neighboring terminal detection unit 201, the content DB 202, and the content information transmission-reception unit 205 respectively have same functions as the neighboring terminal detection unit 101, the content DB 102, and the content information transmission-reception unit 105 in the communication terminal 100 according to the first example embodiment illustrated in Fig. 1. Accordingly, description of the neighboring terminal detection unit 201, the content DB 202, and the content information transmission-reception unit 205 is omitted.

In addition to the function of the content transmission determination unit 103 described in the first example embodiment, the content transmission determination unit 203 has the following function. In accordance with a terminal identifier of a neighboring communication terminal from the neighboring terminal detection unit 201, the content transmission determination unit 203 extracts a content identifier and a content holder list not listing the terminal identifier of the neighboring communication terminal from the content DB 202. The content transmission determination unit 203 outputs the extracted content identifier, the extracted content holder list, and the detected terminal identifier of the neighboring communication terminal to the content holder list transmission-reception unit 207.

In addition to the function of the content management unit 104 described in the first example embodiment, the content holder management unit 204 has the following function. In accordance with a content identifier from the content holder list transmission-reception unit 207 and a content holder list of the content, the content holder management unit 204 searches the content DB 202 for a content matching the content identifier. The content holder management unit 204 adds a terminal identifier contained in the content holder list received from the content holder list transmission-reception unit 207 to a content holder list of the searched content.

In addition to the function of the communication unit 106 described in the first example embodiment, the communication unit 206 has the following two functions. A first function is, in accordance with a content holder list message from the content holder list transmission-reception unit 207, transmitting a content holder list message with a terminal identifier of a detected neighboring communication terminal as a destination.

A second function is, in accordance with a content holder list message received from another communication terminal, outputting a content identifier and a content holder list respectively in the content holder list message to the content holder list transmission-reception unit 207.

The content holder list transmission-reception unit 207 has two functions. A first function is outputting a content holder list and a content identifier respectively in a content holder list message from the communication unit 206 to the content holder management unit 204.

A second function is creating a content holder list message in accordance with a content identifier, a content holder list, and a terminal identifier of a detected neighboring communication terminal respectively from the content transmission determination unit 203, and outputting the created message to the communication unit 206. The content holder list message is for transmitting the content identifier and the content holder list, with the terminal identifier of the neighboring communication terminal as a destination.

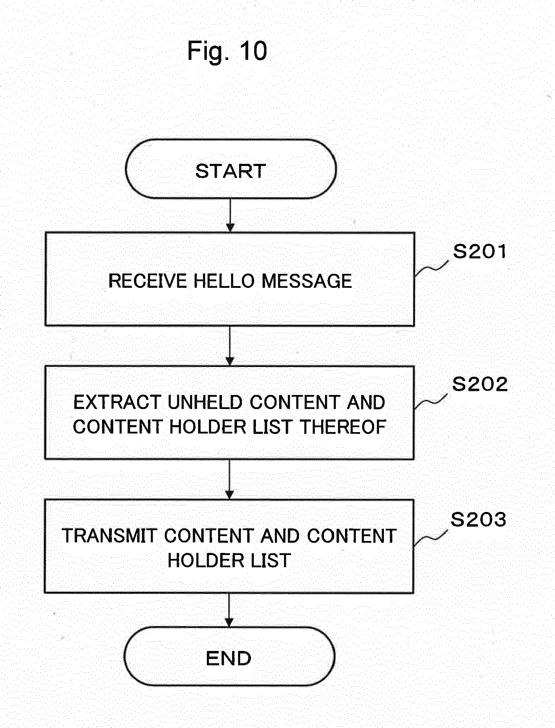

Figs. 10 to 13 are flowcharts illustrating operation examples of the communication terminal 200 according to the present example embodiment. Referring to Figs. 10 to 13, an operation of the communication terminal 200 will be described.

Fig. 10 is a flowchart illustrating an operation example when a local terminal receives a signal including a terminal identifier from a neighboring communication terminal and detects the neighboring communication terminal. As an operation at the time, the local terminal transmits a content not held by the neighboring communication terminal and a content holder list of the content to the neighboring communication terminal.

In Fig. 10, by receiving a signal including a terminal identifier such as a Hello message from another communication terminal, the neighboring terminal detection unit 201 detects a neighboring communication terminal (S201).

The neighboring terminal detection unit 201 outputs the received terminal identifier to the content transmission determination unit 203. The content transmission determination unit 203 extracts a content (unheld content) not including the terminal identifier of the neighboring communication terminal, a content identifier thereof, and a content holder list of the content from the content DB 202 (S202).

The content transmission determination unit 203 outputs the extracted content and the terminal identifier of the neighboring communication terminal to the content information transmission-reception unit 205. The content information transmission-reception unit 205 creates a content message transmitting the extracted content, with the terminal identifier of the neighboring communication terminal as a destination, and outputs the created content message to the communication unit 206. The communication unit 206 transmits the content message to the neighboring communication terminal.

The content transmission determination unit 203 outputs the aforementioned extracted content identifier, the content holder list of the content, and the terminal identifier of the neighboring communication terminal to the content holder list transmission-reception unit 207. The content holder list transmission-reception unit 207 creates a content holder list message for transmitting the extracted content holder list, with the terminal identifier of the neighboring communication terminal as a destination, and outputs the created message to the communication unit 206. The communication unit 206 transmits the content holder list message to the neighboring communication terminal (S203).

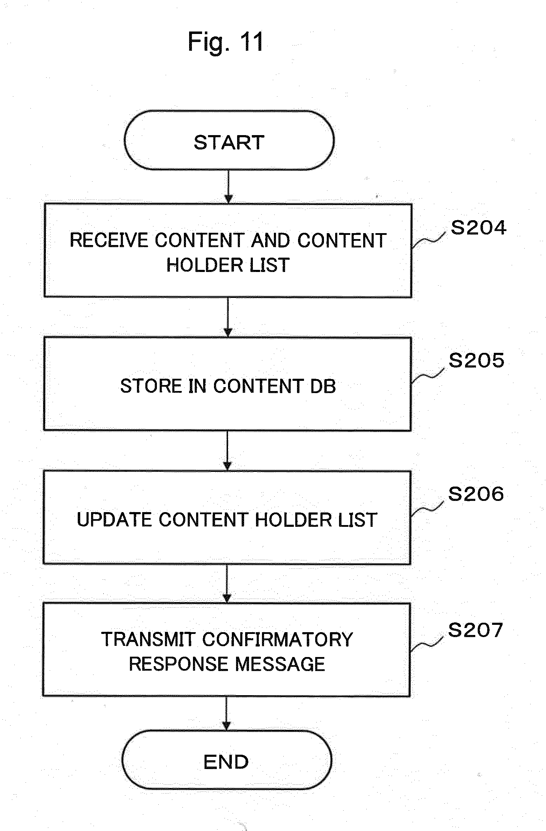

Fig. 11 is a flowchart illustrating an operation example when a local terminal receives a content. An operation at the time is causing the content DB to store the received content and adding a terminal identifier of a transmission terminal and a terminal identifier of the local terminal to a content holder list of the stored content. Additionally, the communication terminal receiving the content transmits a confirmatory response message for confirmatory response to the content transmission terminal.

Steps S204, S205, S206, and S207 in Fig. 11 respectively correspond to Steps S104, S105, S106, and S107 illustrated in Fig. 4 and respectively represent the same operations, and therefore description thereof is omitted. Note that an execution order of Steps S205, S206, and S207 is not considered relevant.

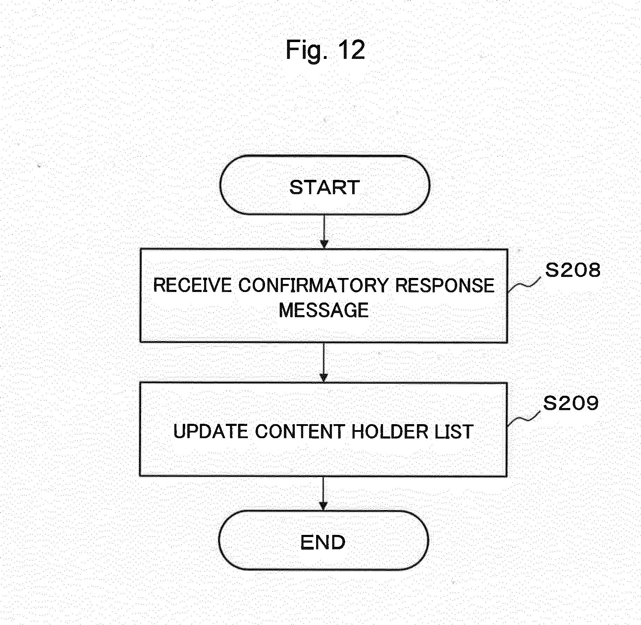

Fig. 12 is a flowchart illustrating an operation example when a local terminal receives a confirmatory response message transmitted from a communication terminal receiving the aforementioned content. As an operation at the time, the local terminal adds a terminal identifier of the communication terminal receiving the content to a content holder list of the transmitted content in the content DB. Steps S208 and S209 in Fig. 12 are respectively same as Steps S108 and S109 illustrated in Fig. 5, and therefore description thereof is omitted.

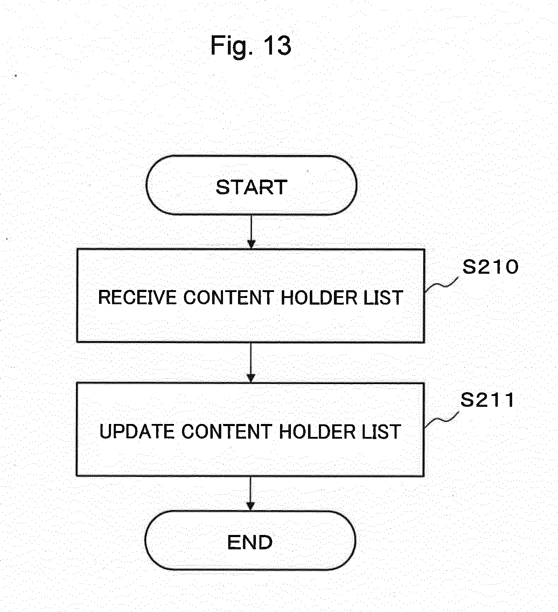

Fig. 13 is a flowchart illustrating an operation example when a local terminal receives a content holder list message. As an operation at the time, the local terminal searches the content DB in the local terminal for a content matching a content identifier in the content holder list message. Then, the local terminal adds information contained in a content holder list in the received content holder list message to a content holder list of the searched content.

In Fig. 13, the communication unit 206 receives a content holder list message from another communication terminal (S210).

The communication unit 206 outputs the content holder list message to the content holder list transmission-reception unit 207. The content holder list transmission-reception unit 207 outputs a content identifier and a content holder list of the content respectively in the content holder list message to the content holder management unit 204. The content holder management unit 204 searches the content DB 202 for a content matching the content identifier received from the content holder list transmission-reception unit 207. The content holder management unit 204 adds information contained in the content holder list received from the content holder list transmission-reception unit 207 to a content holder list of the searched content (S211).

Thus, a communication terminal 200 according to the present example embodiment is able to transmit only an unheld content of a passing communication terminal 200 and acquire the content.

An overall operation of the present example embodiment in the communication network illustrated in Fig. 33 will be described. An overall operation of a communication network with the communication terminal 200 according to the present example embodiment will be described assuming that the communication terminals 601 to 604 are communication terminals 200 according to the present example embodiment.

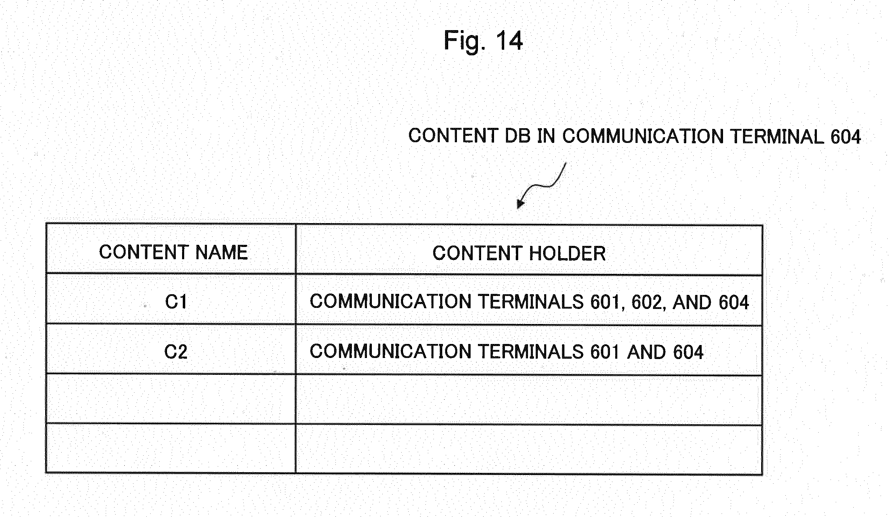

An example of the communication terminal 604 moving in the pattern 2 will be described. When the communication terminal 604 enters the communication range 61 of the communication terminal 601, the communication terminal 601 receives a Hello message from the communication terminal 604. At this time, the content DB in the communication terminal 601 is in a state in Fig. 6. The communication terminal 601 is able to determine that the communication terminal 604 holds neither the content C1 nor C2. Consequently, the communication terminal 601 transmits the contents C1 and C2, and content holder lists of the contents (C1: communication terminals 601 and 602, C2: communication terminal 601) to the communication terminal 604. The communication terminal 604 adds the contents and the content holder lists of the contents to the content DB in the local terminal and updates the content DB as illustrated in Fig. 14. Subsequently, the communication terminal 604 encounters the communication terminal 602 and receives a Hello message from the communication terminal 602. The communication terminal 604 transmits a content (C2 being an unheld content) other than the content (C1) listing the communication terminal 602, in the content DB in the local terminal, to the communication terminal 602.

Consequently, according to the present example embodiment, the communication terminal 604 does not transmit the content (C1) already held by the communication terminal 602, and therefore a communication load between the communication terminals can be suppressed. That is, the communication terminal 604 acquires content holding information of the unencountered communication terminal 602 when encountering the communication terminal 601, and therefore does not transmit a content already held by the communication terminal 602. Additionally, the communication terminal 602 is able to acquire an unheld content (C2) from the communication terminal 604. Thus, the present example embodiment is able to suspend transmission of a content held by a remote communication terminal to lighten a communication load between communication terminals.

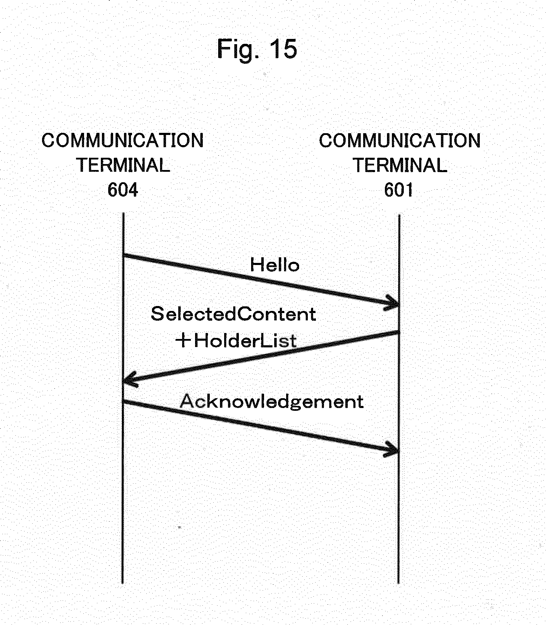

Fig. 15 is a sequence diagram illustrating an operation example of the communication terminal 604 according to the present example embodiment acquiring a content from the communication terminal 601. Compared with Fig. 8, when transmitting a content, the present example embodiment transmits a content holder list of the content at the same time. Consequently, the present example embodiment is able to learn content information held by a communication terminal without a direct encounter in the past with the local terminal. Accordingly, the present example embodiment does not transmit a content already held by a remote communication terminal, and therefore is able to acquire a content with a lightened communication load between communication terminals.

Thus, according to the present example embodiment, when a local terminal passes a communication terminal without an encounter in the past, a content held by the local terminal and, at the same time, held by the remote communication terminal is not transmitted, and therefore a communication load required for content acquisition between the communication terminals can be lightened. The reason is that, according to the present example embodiment, when a communication terminal transmits a content, a content holder list of a transmitted content held by the local terminal is also notified to a destination terminal of the transmitted content. Consequently, according to the present example embodiment, even when the local terminal has no encounter with a passing communication terminal in the past, whether or not a content is previously held can be determined by referring to a content holder list obtained by information sharing with another communication terminal. Accordingly, in accordance with the determination result, only an unheld content may be transmitted, according to the present example embodiment.

As described above, similarly to the first example embodiment, the communication terminal according to the present example embodiment suppresses transmission of a content held by a remote communication terminal and transmits only an unheld content, and therefore enables a communication terminal to acquire a content held by a passing communication terminal, with a lightened communication load between the communication terminals. Additionally, according to the present example embodiment, when an unheld content is transmitted, a content holder list of the unheld content is transmitted and shared between communication terminals, and therefore content information held by a communication terminal without a direct encounter with the local terminal can be determined. Accordingly, the present example embodiment is able to further facilitate content acquisition with a lightened communication load between communication terminals.

The flowcharts and the sequence diagram illustrated in Figs. 10 to 13 and 15 are exemplifications as operation examples of the communication terminal 200 according to the present invention, and an operation of the communication terminal according to the present invention is not limited to the illustrations in the flowcharts and the sequence diagram.

### Third Example Embodiment

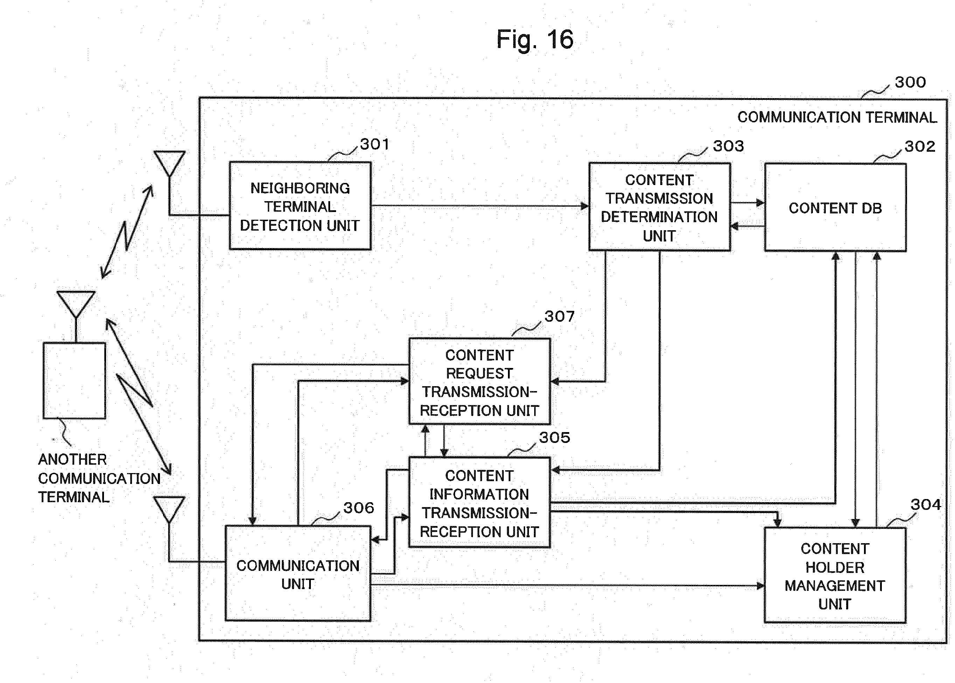

A third example embodiment according to the present invention will be described. Fig. 16 is a block diagram illustrating a configuration example of a communication terminal 300 according to the third example embodiment of the present invention. Referring to Fig. 16, a configuration of the communication terminal 300 according to the present example embodiment will be described.

The communication terminal 300 includes a neighboring terminal detection unit 301, a content DB 302, a content transmission determination unit 303, a content holder management unit 304, a content information transmission-reception unit 305, a communication unit 306, and a content request transmission-reception unit 307.

The neighboring terminal detection unit 301 and the content DB 302 respectively have the same functions as the neighboring terminal detection unit 101 and the content DB 102 in the communication terminal 100 according to the first example embodiment illustrated in Fig. 1, and therefore description thereof is omitted.

The content transmission determination unit 303 searches the content DB 302 in accordance with a terminal identifier of a communication terminal detected by the neighboring terminal detection unit 301. The content transmission determination unit 303 searches for and extracts a content list including a content identifier of a content (unheld content) a content holder list of which does not include the terminal identifier of the detected communication terminal. The content transmission determination unit 303 outputs the extracted content list and the terminal identifier of the detected communication terminal to the content information transmission-reception unit 305.

The content holder management unit 304 searches the content DB 302 in accordance with a content list from the content information transmission-reception unit 305 and the terminal identifier of the detected communication terminal, or a content identifier from the communication unit 306 and the terminal identifier of the communication terminal. In order to update a content holder of a content with a matching content identifier, the content holder management unit 304 searches for a content with a matching content identifier and adds the terminal identifier to a content holder list of the searched content.

The content information transmission-reception unit 305 has four functions. A first function is, in accordance with a content message received from another communication terminal from the communication unit 306, causing the content DB 302 to store a content in the content message. Additionally, the content information transmission-reception unit 305 outputs a terminal identifier of the content transmission terminal, a terminal identifier of the local terminal, and the content identifier to the content holder management unit 304.

A second function is, in accordance with a content list in a content request message from the content request transmission-reception unit 307 and a terminal identifier of a transmission terminal, searching for a content matching a content identifier included in the content list. In other words, the content information transmission-reception unit 305 searches the content DB 302 for a content matching the content identifier in the content list. The content information transmission-reception unit 305 creates a content message for transmitting the searched content, with the transmission terminal identifier of the content request message as a destination, and outputs the created content message to the communication unit 306.

A third function is, in accordance with a content list message from the communication unit 306, outputting a terminal identifier of a transmission terminal and a content list respectively in the content list message to the content request transmission-reception unit 307.

A fourth function is, in accordance with a terminal identifier and a content list from the content transmission determination unit 303, creating a content list message for transmitting the content list, with the terminal identifier as a destination, and outputting the created message to the communication unit 306.

The communication unit 306 has the following eight functions. A first function is transmitting a content message from the content information transmission-reception unit 305 to a destination communication terminal.

A second function is transmitting a content list message from the content information transmission-reception unit 305 to a destination communication terminal.

A third function is transmitting a content request message from the content request transmission-reception unit 307 to a destination communication terminal.

A fourth function is receiving a content message from another terminal and outputting the content message to the content information transmission-reception unit 305.

A fifth function is receiving a content list message from another terminal and outputting the content list message to the content information transmission-reception unit 305.

A sixth function is receiving a content request message from another terminal and outputting the content request message to the content request transmission-reception unit 307.

A seventh function is, when receiving a content message from another terminal, transmitting a confirmatory response message including a terminal identifier of the local terminal and a received content identifier to the transmission terminal of the content.

An eighth function is, when receiving a confirmatory response message from another terminal, outputting a content identifier in the confirmatory response message and a terminal identifier of the transmission terminal of the confirmatory response message to the content holder management unit 304.

The content request transmission-reception unit 307 has two functions. A first function is, in accordance with a content list and a terminal identifier respectively from the content information transmission-reception unit 305, selecting a content identifier requested by the local terminal from the content list. The content request transmission-reception unit 307 creates a content request message for transmitting the content list including the selected content identifier, with the terminal identifier as a destination. Then, the content request transmission-reception unit 307 outputs the created content request message to the communication unit 306.

A second function is, in accordance with a content request message from the communication unit 306, outputting a content list and a terminal identifier of a transmission terminal respectively in the content request message to the content information transmission-reception unit 305.

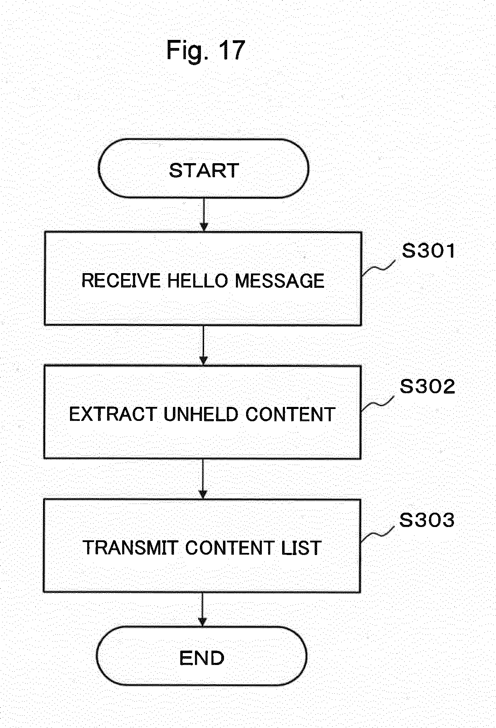

Figs. 17 to 21 are flowcharts illustrating operation examples of the communication terminal 300 according to the present example embodiment. Referring to Figs. 17 to 21, an operation of the communication terminal 300 will be described.

Fig. 17 is a flowchart illustrating an operation example when a local terminal receives a signal including a terminal identifier from a neighboring communication terminal and detects the neighboring communication terminal. As an operation at the time, the local terminal transmits a content list not held by the neighboring communication terminal to the neighboring communication terminal.

In Fig. 17, by receiving a signal including a terminal identifier such as a Hello message from another communication terminal, the neighboring terminal detection unit 301 detects the neighboring communication terminal (S301).

The neighboring terminal detection unit 301 outputs the received terminal identifier to the content transmission determination unit 303. The content transmission determination unit 303 extracts from the content DB 302 a content list of a content identifier of a content (unheld content) not including the terminal identifier of the neighboring communication terminal (S302).

The content transmission determination unit 303 outputs the extracted content list and the terminal identifier of the neighboring communication terminal to the content information transmission-reception unit 305. The content information transmission-reception unit 305 creates a content list message for transmitting the content list, with the neighboring communication terminal as a destination, and outputs the created content list message to the communication unit 306. The communication unit 306 transmits the content list message to the destination communication terminal (S303).

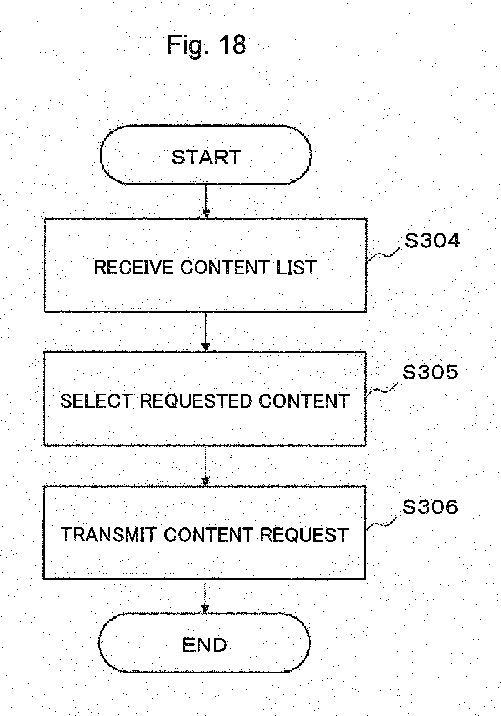

Fig. 18 is a flowchart illustrating an operation example when a local terminal receives a content list message. As an operation at the time, the local terminal selects a requested content identifier from a content list in the received content list message to newly create a requested content list, and transmits the requested content list to a transmission terminal of the content list message.

In Fig. 18, the communication unit 306 receives a content list message from another communication terminal (S304).

The communication unit 306 outputs the received content list message to the content information transmission-reception unit 305. The content information transmission-reception unit 305 outputs a content list and a terminal identifier of the transmission terminal respectively in the content list message to the content request transmission-reception unit 307. The content request transmission-reception unit 307 selects a requested content from the received content list (S305).

The content request transmission-reception unit 307 newly generates a requested content list with the selected content identifier, and creates a content request message, with the terminal identifier of the transmission terminal as a destination. The created content request message is output to the communication unit 306. The communication unit 306 transmits the content request message to the destination communication terminal (S306).

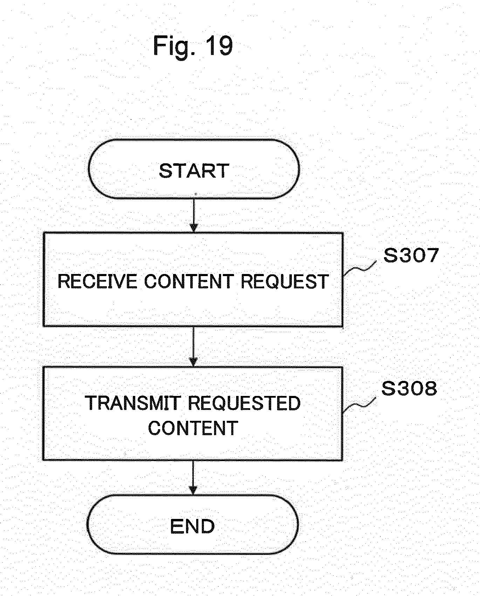

Fig. 19 is a flowchart illustrating an operation example when a local terminal receives a content request message.

In Fig. 19, the communication unit 306 receives a content request message from another communication terminal (S307).

The communication unit 306 outputs the received content request message to the content request transmission-reception unit 307. The content request transmission-reception unit 307 outputs a content list in the content request message and a terminal identifier of the transmission terminal of the content request message to the content information transmission-reception unit 305. The content information transmission-reception unit 305 searches the content DB 302 in accordance with a content identifier in the received content list. The content information transmission-reception unit 305 creates a content message for transmitting a searched content matching the content identifier, with the terminal identifier of the transmission terminal of the content request as a destination, and outputs the created message to the communication unit 306. The communication unit 306 transmits the content message to the destination communication terminal (S308).

Further, when the content message is transmitted, the terminal identifier of the destination terminal of the content may be added to a content holder list of the transmitted content in the content DB in the local terminal. In that case, the content information transmission-reception unit 305 outputs the identifier of the transmitted content and the identifier of the destination terminal to the content holder management unit 304.

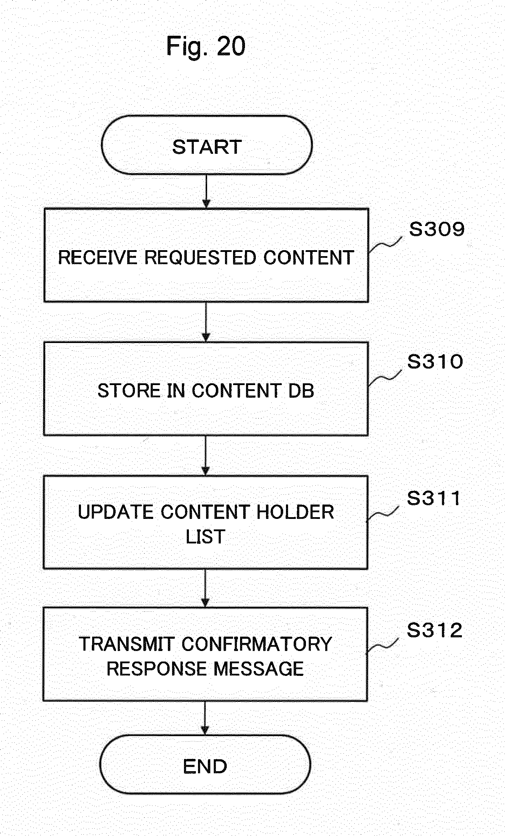

Fig. 20 is a flowchart illustrating an operation example when a local terminal receives a content. An operation at the time is causing the content DB to store the received content, and adding a terminal identifier of the local terminal and a terminal identifier of a transmission terminal of the content to a content holder list of the received content in the content DB. Further, a confirmatory response message is transmitted to the transmission terminal of the content.

In Fig. 20, the communication unit 306 receives a content message from another communication terminal (S309).

The communication unit 306 outputs the received content message to the content information transmission-reception unit 305. The content information transmission-reception unit 305 causes the content DB 302 to store a content in the content message (S310).

The content information transmission-reception unit 305 outputs the received content identifier, a terminal identifier of the transmission terminal of the content, and a terminal identifier of the local terminal to the content holder management unit 304. The content holder management unit 304 searches the content DB 302 for the received content identifier and adds the terminal identifier of the local terminal and the terminal identifier of the transmission terminal of the content to a content holder list of the searched content (S311).

The communication unit 306 transmits a confirmatory response message, with the transmission terminal of the content as a destination (S312).

Note that an execution order of Steps S310, S311, and S312 is not considered relevant.

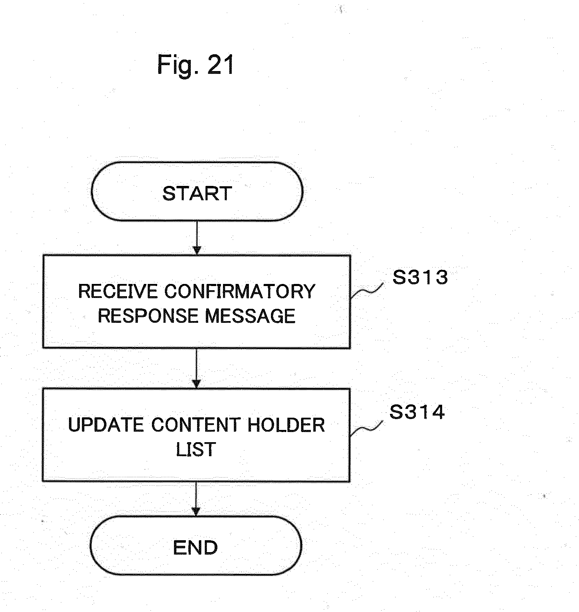

Fig. 21 is a flowchart illustrating an operation example when a local terminal receives a confirmatory response message. An operation at the time is adding a terminal identifier of a communication terminal receiving a content to a content holder list of the transmitted content in the content DB.

In Fig. 21, the communication unit 306 receives a confirmatory response message from another communication terminal (S313).

The communication unit 306 outputs a content identifier in the confirmatory response message, reception of the content identifier being completed, and a terminal identifier of the transmission terminal of the confirmatory response message to the content holder management unit 304. The content holder management unit 304 searches the content DB 302 for a content matching the content identifier, reception of which being completed, and adds the terminal identifier of the transmission terminal of the confirmatory response message to a content holder list of the searched content (S314).

Thus, the communication terminal 300 according to the present example embodiment is able to transmit a content list only with an unheld content of a passing communication terminal 300, and transmit and share a content selected from the transmitted content list only.

An overall operation of the present example embodiment in the communication network illustrated in Fig. 33 will be described. An overall operation of a communication network with the communication terminal 300 according to the present example embodiment will be described assuming that the communication terminals 601 to 604 are communication terminals 300 according to the present example embodiment.

An example of the communication terminal 603 moving in the pattern 1 will be described. When the communication terminal 603 enters the communication range 61 of the communication terminal 601 and the communication terminal 601 receives a Hello message from the communication terminal 603, a content list of C1 and C2 is transmitted to the communication terminal 603. Specifically, the communication terminal 601 receives a Hello message from the communication terminal 603. In accordance with a terminal identifier of the communication terminal 603, the communication terminal 601 determines that C1 and C2 are unheld contents of the communication terminal 603 from content holder lists of C1 and C2 as indicated in Fig. 6.

In accordance with the determination result, the communication terminal 601 transmits a content list of C1 and C2 to the communication terminal 603. Receiving the content list of the unheld contents, the communication terminal 603 is assumed to request C1 and C2. The communication terminal 603 returns a content request including respective content identifiers of C1 and C2 to the communication terminal 601. The communication terminal 601 transmits the contents (C1 and C2) listed in the content request to the communication terminal 603. When receiving C1 and C2, the communication terminal 603 causes the content DB in the local terminal to store C1 and C2, and adds the communication terminal 601 and the communication terminal 603 to content holder lists of C1 and C2.

Further, the communication terminal 603 transmits a confirmatory response message to the communication terminal 601. The communication terminal 601 receiving the confirmatory response message adds the communication terminal 603 to the content holder lists of C1 and C2 in the content DB in the local terminal.

The communication terminal 603 moves out of the communication range 61 and enters the communication range 61 again. Even when the communication terminal 601 receives a Hello message from the communication terminal 603 again, the content holder lists of C1 and C2 in the content DB in the communication terminal 601 store the terminal identifier of the communication terminal 603. Accordingly, the communication terminal 601 determines that the communication terminal 603 holds both contents C1 and C2, and does not retransmit the content list. Consequently, the communication terminal 300 according to the present example embodiment is able to suspend ineffective transmission of a content list and lighten a communication load between communication terminals.

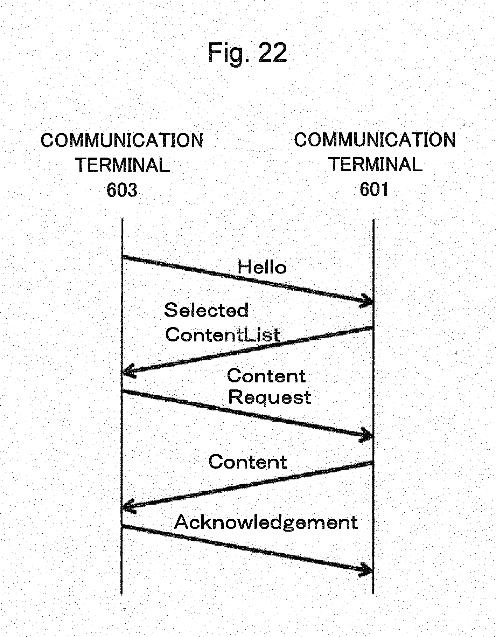

Fig. 22 is a sequence diagram illustrating an operation example of the communication terminal 603 according to the present example embodiment acquiring a content from the communication terminal 601. Compared with the pull-type content acquisition in Fig. 32, the communication terminal according to the present example embodiment transmits a content list of a content determined not held by the remote communication terminal, instead of transmitting a content list of all contents held by the local terminal. Accordingly, the communication terminal is able to lighten a communication load caused by a content list.

Thus, the present example embodiment is able to lighten a communication load required for content acquisition, by not transmitting to a communication terminal frequently encountering a local terminal a content list already held by the communication terminal. The reason is that, according to the present example embodiment, when transmitting a content, a local terminal records a terminal identifier of a destination terminal as a content holder list of the transmitted content and, when the content is transmitted again, is able to determine whether or not the content has been already transmitted in the past. When the local terminal transmits a content, the terminal identifier of the destination terminal of the content is recorded in the content holder list as a holder of the content. Similarly, when the local terminal receives a content, a terminal identifier of a transmission terminal of the content is recorded in a content holder list as a holder of the content. Accordingly, according to the present example embodiment, only an unheld content list can be transmitted in accordance with a determination result of held or unheld.

As described above, the communication terminal according to the present example embodiment suppresses transmission of a content list of a content held by a remote communication terminal, and transmits only an unheld content requested by the remote communication terminal. Accordingly, the communication terminal according to the present example embodiment is able to acquire a content held by a communication terminal passing the communication terminal, with a lightened communication load between the communication terminals.

The flowcharts and the sequence diagram illustrated in Figs. 17 to 22 are exemplifications as operation examples of the communication terminal 300 according to the present invention, and an operation of the communication terminal according to the present invention is not limited to the illustrations in the flowcharts and the sequence diagram.

### Fourth Example Embodiment

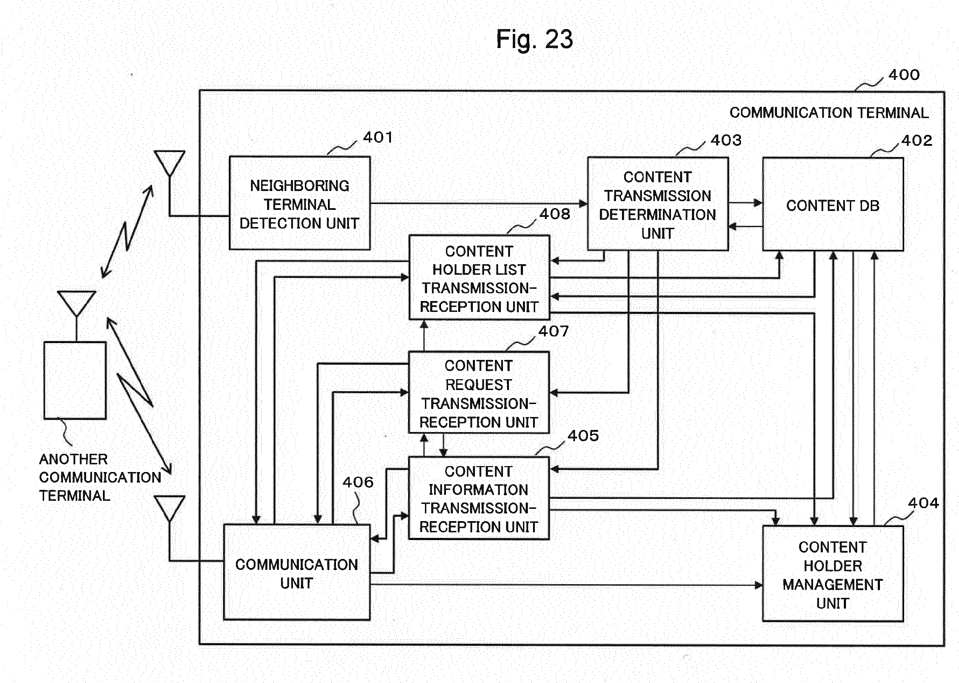

A fourth example embodiment according to the present invention will be described. Fig. 23 is a block diagram illustrating a configuration example of a communication terminal 400 according to the fourth example embodiment of the present invention. Referring to Fig. 23, a configuration of the communication terminal 400 according to the present example embodiment will be described.

The communication terminal 400 includes a neighboring terminal detection unit 401, a content DB 402, a content transmission determination unit 403, a content holder management unit 404, a content information transmission-reception unit 405, and a communication unit 406. Additionally, the communication terminal 400 includes a content request transmission-reception unit 407 and a content holder list transmission-reception unit 408.

The neighboring terminal detection unit 401, the content DB 402, and the content information transmission-reception unit 405 respectively have the same functions as the neighboring terminal detection unit 301, the content DB 302, and the content information transmission-reception unit 305 in the communication terminal 300 illustrated in Fig. 16, and therefore description thereof is omitted.

In addition to the function of the content holder management unit 304 in the communication terminal 300 illustrated in Fig. 16, the content holder management unit 404 has the following function. The content holder management unit 404 adds an identifier of a content received from the content holder list transmission-reception unit 408 and a content holder list of the content to a content holder list of the target content in the content DB 402.

In addition to the function of the communication unit 306 illustrated in Fig. 16, the communication unit 406 has the following two functions. A first function is receiving a content holder list message from another communication terminal and outputting the content holder list message to the content holder list transmission-reception unit 408.

A second function is receiving a content holder list message from the content holder list transmission-reception unit 408 and transmitting the content holder list message to a destination communication terminal.

In addition to the function of the content request transmission-reception unit 307 illustrated in Fig. 16, the content request transmission-reception unit 407 has the following function. The content request transmission-reception unit 407 has a function of outputting a content list in a content request message received from the communication unit 406 and a terminal identifier of a transmission terminal of the content request message to the content holder list transmission-reception unit 408.

The content holder list transmission-reception unit 408 has the following two functions. A first function is outputting a content identifier and a content holder list of the content respectively in a content holder list message received from another communication terminal from the communication unit 406 to the content holder management unit 404.

A second function is, in accordance with a terminal identifier and a content list from the content request transmission-reception unit 407, searching the content DB 402 for a content matching a content identifier in the content list. Then, the content holder list transmission-reception unit 408 acquires a content holder list of the searched content and creates a content holder list message for transmitting the acquired content holder and the acquired identifier, with the terminal identifier as a destination. The content holder list transmission-reception unit 408 outputs the created content holder list message to the communication unit 406.

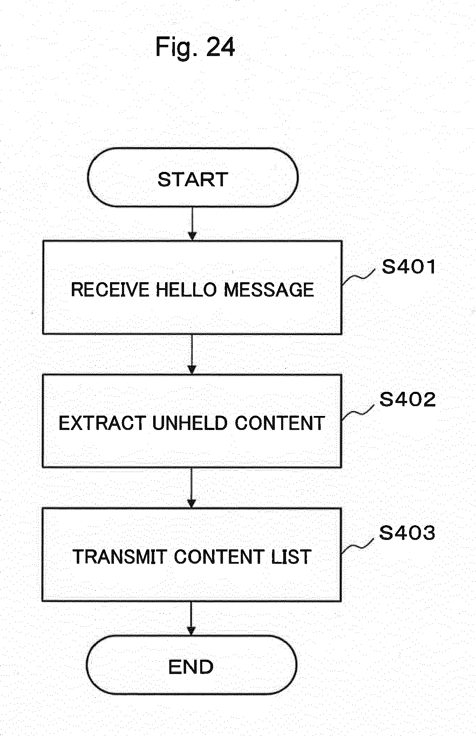

Figs. 24 to 29 are flowcharts illustrating operation examples of the communication terminal 400 according to the present example embodiment. Referring to Figs. 24 to 29, an operation of the communication terminal 400 will be described.

Fig. 24 is a flowchart illustrating an operation example when a local terminal receives a signal including a terminal identifier from a neighboring communication terminal and detects the neighboring communication terminal. As an operation at the time, the local terminal transmits a content list not held by the neighboring communication terminal to the neighboring communication terminal.

Steps S401, S402, and S403 in Fig. 24 respectively correspond to Steps S301, S302, and S303 illustrated in Fig. 17 and respectively represent the same operations, and therefore description thereof is omitted.

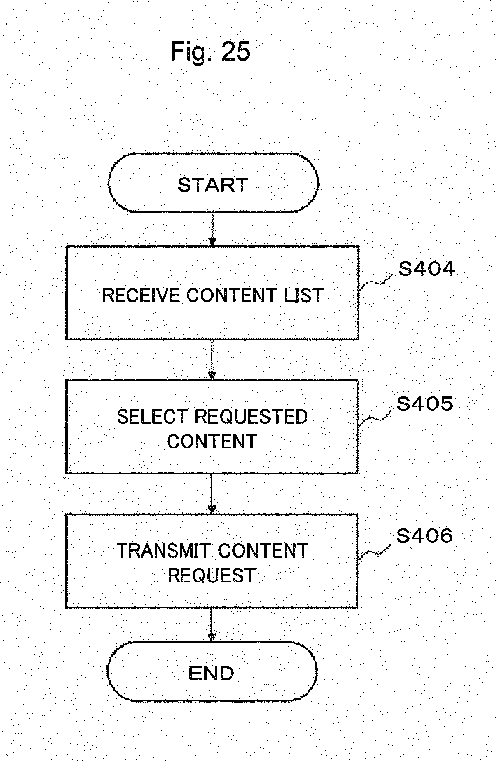

Fig. 25 is a flowchart illustrating an operation example when a local terminal receives a content list. As an operation at the time, the local terminal selects a requested content identifier from the received content list, newly creates a requested content list, and transmits the created requested content list to a transmission terminal of the received content list.

Steps S404, S405, and S406 in Fig. 25 respectively correspond to Steps S304, S305, and S306 illustrated in Fig. 18 and respectively represent the same operations, and therefore description thereof is omitted.

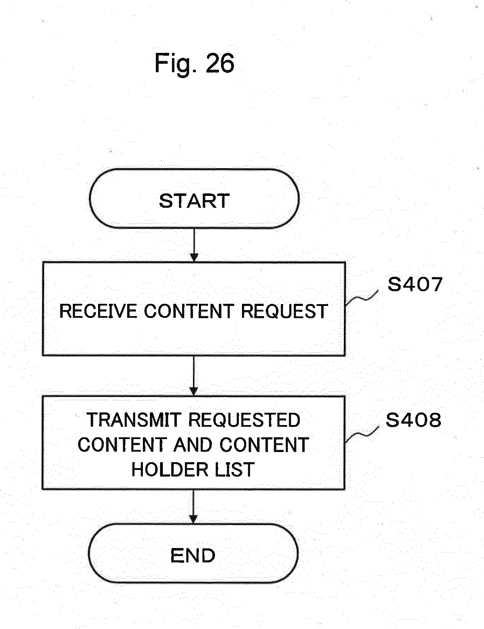

Fig. 26 is a flowchart illustrating an operation example when a local terminal receives a content request. As an operation at the time, the local terminal transmits a content included in a content list in the received content request and a content holder list of the content, with a transmission terminal of the content request as a destination.

In Fig. 26, the communication unit 406 receives a content request message from another communication terminal (S407).

The communication unit 406 outputs the received content request message to the content request transmission-reception unit 407. The content request transmission-reception unit 407 outputs a content list and a terminal identifier of a transmission terminal respectively in the content request message to the content information transmission-reception unit 405. The content information transmission-reception unit 405 searches the content DB 402 for a content in the content list. The content information transmission-reception unit 405 creates a content message for transmitting a searched content matching the content identifier, with the terminal identifier of the transmission terminal of the received content request as a destination.

The content information transmission-reception unit 405 outputs the created content message to the communication unit 406. The communication unit 406 transmits the content message to the destination communication terminal. At the same time, the content request transmission-reception unit 407 outputs the content identifier in the content request message and the terminal identifier of the transmission terminal of the content request message to the content holder list transmission-reception unit 408.

The content holder list transmission-reception unit 408 searches the content DB 402 for a content matching the output content identifier. The content holder list transmission-reception unit 408 extracts a content holder list of the searched content matching the content identifier. The content holder list transmission-reception unit 408 creates a content holder list message for transmitting the extracted content holder list, with the terminal identifier of the transmission terminal of the content request as a destination, and outputs the created message to the communication unit 406. The communication unit 406 transmits the content holder list message to the destination communication terminal (S408).

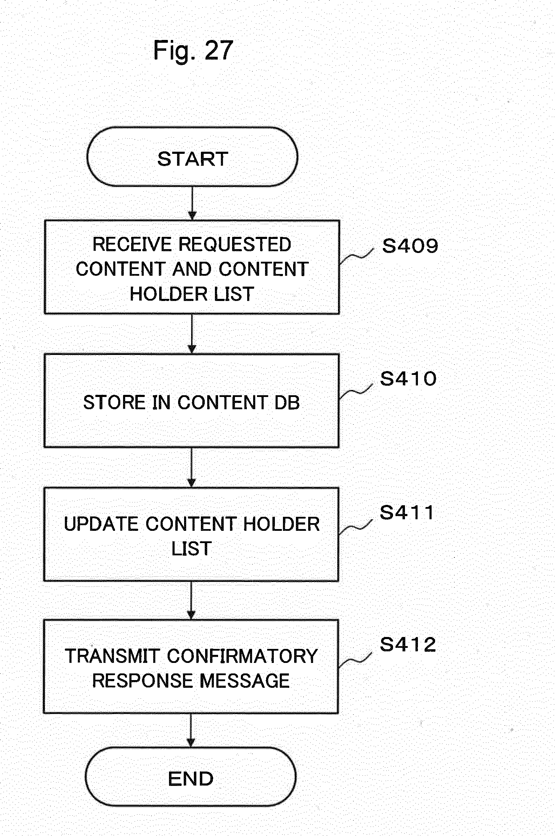

Fig. 27 is a flowchart illustrating an operation example when a local terminal receives a content. As an operation at the time, the local terminal causes the content DB to store the received content, and adds a terminal identifier of the local terminal and a terminal identifier of a transmission terminal of the content to a content holder list of the received content in the content DB. Further, the local terminal transmits a confirmatory response message to the transmission terminal of the content.

Steps S409, S410, S411, and S412 in Fig. 27 respectively correspond to Steps S309, S310, S311, and S312 illustrated in Fig. 20 and respectively represent the same operations, and therefore description thereof is omitted.

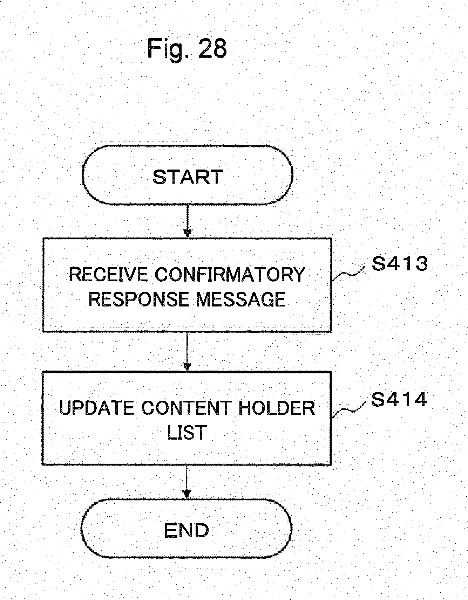

Fig. 28 is a flowchart illustrating an operation example when a local terminal receives a confirmatory response message. As an operation at the time, the local terminal adds a terminal identifier of a communication terminal receiving a content to a content holder list of the transmitted content in the content DB.

Steps S413 and S414 in Fig. 28 respectively correspond to Steps S313 and S314 illustrated in Fig. 21 and respectively represent the same operations, and therefore description thereof is omitted.

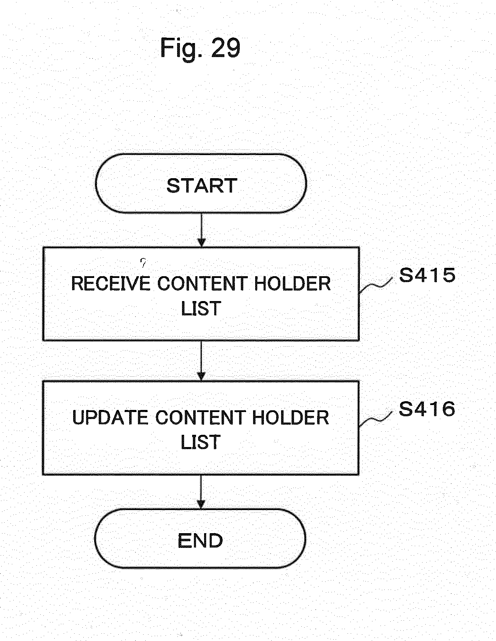

Fig. 29 is a flowchart illustrating an operation example when a local terminal receives a content holder list message. As an operation at the time, the local terminal adds information contained in a content holder list in each content in the received content holder list message to a content holder list of the target content in the content DB.

In Fig. 29, the communication unit 406 receives a content holder list message of a content from another communication terminal (S415).

The communication unit 406 outputs the content holder list message to the content holder list transmission-reception unit 408. The content holder list transmission-reception unit 408 outputs a content identifier and a content holder list of the content respectively in the content holder list message to the content holder management unit 404. The content holder management unit 404 searches the content DB 402 for a content matching the content identifier received from the content holder list transmission-reception unit 408. Then, the content holder management unit 404 adds information contained in the content holder list received from the content holder list transmission-reception unit 408 to a content holder list of the searched content (S416).

Thus, the communication terminal 400 according to the present example embodiment is able to transmit a content list only with an unheld content of a passing communication terminal 400, and transmit and share a content selected from the transmitted content list only.

An overall operation of the present example embodiment in the communication network illustrated in Fig. 33 will be described. An overall operation of a communication network with the communication terminal 400 according to the present example embodiment will be described assuming that the communication terminals 601 to 604 are communication terminals 400 according to the present example embodiment.

An example of the communication terminal 604 moving in the pattern 2 will be described. When the communication terminal 604 enters the communication range 61 of the communication terminal 601 and the communication terminal 601 receives a Hello message from the communication terminal 604, a content list of C1 and C2 is transmitted to the communication terminal 604.

That is, the communication terminal 601 receives a Hello message from the communication terminal 604. In accordance with a terminal identifier of the communication terminal 604, the communication terminal 601 determines that C1 and C2 are unheld contents of the communication terminal 604 from content holder lists of C1 and C2 as indicated in Fig. 6. In accordance with the determination result, the communication terminal 601 transmits the content list of C1 and C2 to the communication terminal 604. Receiving the content list of the unheld contents, the communication terminal 604 is assumed to request C1 and C2. The communication terminal 604 returns a content request for the content list including C1 and C2 to the communication terminal 601. The communication terminal 601 transmits the contents (C1 and C2) listed in the content request to the communication terminal 604. At that time, the communication terminal 601 transmits the content holder lists (C1: communication terminals 601 and 602, C2: communication terminal 601) of the transmitted contents (C1 and C2) to the communication terminal 604. When receiving C1 and C2, the communication terminal 604 causes the content DB in the local terminal to store C1 and C2, and adds the terminal identifiers of the communication terminal 601 and the communication terminal 604 to content holder lists of the C1 and C2. Additionally, when receiving the content holder list, the communication terminal 604 adds a terminal identifier of the communication terminal 602 to the content holder list of C1 in the content DB in the local terminal.

The communication terminal 604 moves out of the communication range 61 and enters the communication range 62. When receiving a Hello message from the communication terminal 602 and detecting existence of the communication terminal 602 nearby, the communication terminal 604 searches the content DB in the local terminal for a content not stored by the communication terminal 602. In accordance with the search result, the communication terminal 604 determines that a content list including only a content identifier of C2 be transmitted.

The communication terminal 604 transmits a content list including the determined content identifier (C2) to the communication terminal 602. The communication terminal 602 selects a requested content from the received content list (C2) and transmits a content request to the communication terminal 604. It is assumed that the communication terminal 602 requests C2. The communication terminal 604 receiving the content request transmits C2 corresponding to the content identifier included in a content list in the content request to the communication terminal 602.

At that time, the communication terminal 604 transmits a content holder list of C2 (communication terminals 601 and 602) in the content DB in the local terminal. The communication terminal 602 receives C2, causes the content DB in the communication terminal 602 to store C2, and further adds the local terminal (communication terminal 602) and the transmission terminal of the content (communication terminal 604) as content holders. By receiving the content holder list message, the communication terminal 602 is able to further add the communication terminal 601 to the content holder list of C2.

Consequently, even when a communication terminal without an encounter in the past is encountered, whether or not a content is already held can be determined, and a communication load in content acquisition can be suppressed, by not transmitting a content list of a content determined to be held.

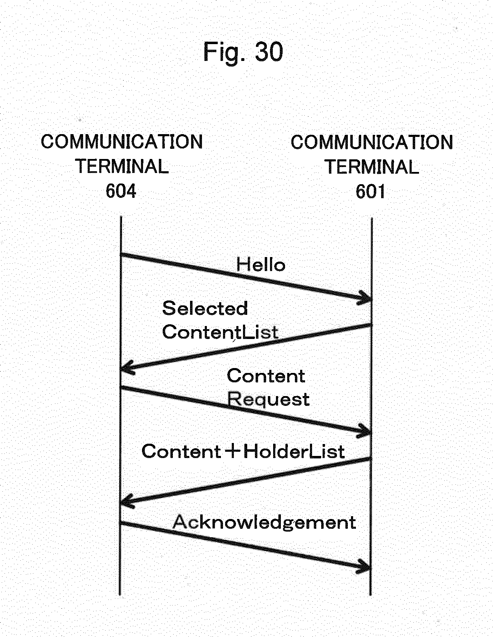

Fig. 30 is a sequence diagram illustrating an operation example of the communication terminal 604 according to the present example embodiment acquiring a content from the communication terminal 601. Compared with Fig. 22, the present example embodiment in Fig. 30 differs in that, when transmitting a content, the communication terminal 601 also transmits a content holder list of the transmitted content. Consequently, even when encountering a communication terminal without a direct encounter in the past by the local terminal, the communication terminal 604 is able to determine whether or not the encountered communication terminal holds a content. Accordingly, the present example embodiment is able to transmit an unheld content list only, and suppress a communication load caused by a content list.

Thus, according to the present example embodiment, when a local terminal passes a communication terminal without an encounter in the past, the local terminal does not transmit a content list of a content held by the local terminal and also by the remote communication terminal. Consequently, the present example embodiment is able to lighten a communication load required for content acquisition between the communication terminals. The reason is that, according to the present example embodiment, when transmitting a content, a communication terminal also notifies a content holder list of the transmitted content held by the local terminal to a destination terminal of the transmitted content. Consequently, according to the present example embodiment, even when a local terminal has no encounter with a passing communication terminal in the past, whether or not the passing communication terminal previously holds a content can be determined by referring to a content holder list obtained by information sharing with another communication terminal. Accordingly, the present example embodiment is able to transmit an unheld content list in accordance with the determination result of held or unheld, and transmit only a requested unheld content.

As described above, similarly to the third example embodiment, the communication terminal according to the present example embodiment suppresses transmission of a content list of a content held by a remote communication terminal and transmits only an unheld content requested by the remote communication terminal. Accordingly, the communication terminal according to the present example embodiment is able to acquire a content held by a communication terminal passing the communication terminal, with a lightened communication load between the communication terminals. Additionally, in accordance with the present example embodiment, when a requested unheld content is transmitted, a content holder list of the requested unheld content is transmitted and shared between communication terminals, and therefore content information held by a communication terminal without a direct encounter with the local terminal can be determined. Accordingly, the present example embodiment is able to further facilitate content acquisition with a lightened communication load between communication terminals.

It has been described that, when transmitting a requested content, the content holder list transmission-reception means outputs a content holder list including the requested transmitted content as a content holder list message. However, the content holder list transmission-reception means may output a content holder list related to a content extracted as an unheld content of a remote communication terminal as a content holder list message. Holding status of an unheld content not requested by the remote communication terminal in another communication terminal can be shared.

Further, the flowcharts and the sequence diagram illustrated in Figs. 24 to 30 are exemplifications as operation examples of the communication terminal 400 according to the present invention, and an operation of the communication terminal according to the present invention is not limited to the illustrations in the flowcharts and the sequence diagram.

The present invention is not limited to the aforementioned example embodiments, and various changes and modifications may be made to the present invention within the scope thereof.

For example, the communication terminal according to the respective aforementioned example embodiments may be a communication terminal communicating in a communication system allowing for mutual communication. Specifically, a communication medium used by a communication function of a communication device may use a wired medium, a wireless medium, an optical medium, and a sonic medium, and allow for mutual communication. For example, when a wireless medium is used, a communication system of a communication device may use common communication such as a wireless local area network (LAN) or the like.

Further, the communication terminal according to the respective aforementioned example embodiments is composed of a device such as a personal computer, a personal digital assistant (PDA), a tablet terminal, a smartphone, a mobile phone, and a fixed phone. Further, the communication terminal is not limited to the above and may be another similar device having a function of exchanging information with the outside.

Further, communication control processing by the communication terminal according to the respective aforementioned example embodiments may be provided by software using a computer (unillustrated) included in a communication device. Specifically, the communication control processing may be provided by a computer program being read and executed by a central processing unit (CPU), the program performing the processing.

The program may be stored in a semiconductor storage device such as a read only memory (ROM), a random access memory (RAM), and a flash memory, and a non-transitory medium such as an optical disk, a magnetic disk, and a magneto-optical disk.

The aforementioned example embodiments may be described in part or in whole as the following Supplementary Notes but are not limited thereto.

### Supplementary Note 1

A communication terminal including:
a content DB that stores a content and a content holder list listing a content holder that holds the content, in a mutually associated manner;
a neighboring terminal detection means that receives an external signal, detects a neighboring communication terminal, and outputs a terminal identifier of the neighboring communication terminal included in the external signal;
a content transmission determination means that searches the content holder list in accordance with the terminal identifier, determines the content related to the unsearched content holder list as an unheld content, and outputs the unheld content as a transmitted content, with the terminal identifier as a destination terminal identifier; and
a content information transmission-reception means that creates, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as the transmission terminal identifier, and transmits the created message as a content information message to the neighboring communication terminal.

### Supplementary Note 2

The communication terminal according to Supplementary Note 1, further including
a content holder list transmission-reception means that outputs the content holder list related to the transmitted content as a transmitted content holder list, wherein
the content information transmission-reception means,
when transmitting the content message, includes the transmitted content holder list in the content message.

### Supplementary Note 3

The communication terminal according to Supplementary Note 1 or 2, wherein
the content information transmission-reception means,
when receiving the content list message, outputs the content list and the transmission terminal identifier respectively included in the content list message, and
further includes a content request transmission-reception means that
selects a requested content identifier in accordance with a content identifier included in the content list, and
transmits a content request message requesting transmission of the content corresponding to the selected content identifier.

### Supplementary Note 4

The communication terminal according to Supplementary Note 3, wherein
the content transmission determination means,
when the content request transmission-reception means receives the content request message, includes the content requested by the content request message in the transmitted content.

### Supplementary Note 5

The communication terminal according to any one of Supplementary Notes 1 to 4, further including
a content holder management means that adds the destination terminal identifier to the content holder list related to the transmitted content, wherein
a timing of the content holder management means adding the destination terminal identifier of the transmitted content to the content holder list is
when transmitting the content message, or
when receiving from the neighboring communication terminal a confirmatory response message notifying reception completion of the content message.

### Supplementary Note 6

The communication terminal according to Supplementary Note 5, wherein
the content information transmission-reception means,
when receiving the content message, outputs the transmitted content, the destination terminal identifier, and the transmission terminal identifier respectively included in the content message, and, when the content message includes the transmitted content holder list, further outputs the transmitted content holder list,
the content holder management means
adds the destination terminal identifier and the transmission terminal identifier to a content holder list related to the transmitted content, and, when the transmitted content holder list exists, further adds information contained in the transmitted content holder list, and
the content DB
stores the transmitted content and the added content holder list in a mutually associated manner.

### Supplementary Note 7

A content delivery system including a plurality of the communication terminals according to any one of Supplementary Notes 1 to 6.

### Supplementary Note 8

The content delivery system according to Supplementary Note 7, wherein a communication technology between the communication terminals is DTN or epidemic routing.

### Supplementary Note 9

The content delivery system according to Supplementary Note 7 or 8, wherein a communication system between the communication terminals is wireless LAN.

### Supplementary Note 10

A content delivery method including:
storing a content and a content holder list listing a content holder that holds the content, in a mutually associated manner, receiving an external signal, detecting a neighboring communication terminal, and outputting a terminal identifier of the neighboring communication terminal included in the external signal;
searching the content holder list in accordance with the terminal identifier, determining the content related to the unsearched content holder list as an unheld content, and outputting the unheld content as a transmitted content, with the terminal identifier as a destination terminal identifier; and
creating, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as the transmission terminal identifier, and transmitting the created message as a content information message to the neighboring communication terminal.

### Supplementary Note 11

A communication terminal control program causing a computer as a communication terminal including a content DB that stores a content and a content holder list listing a content holder that holds the content, in a mutually associated manner, to operate as:
a neighboring terminal detection means that receives an external signal, detects a neighboring communication terminal, and outputs a terminal identifier of the neighboring communication terminal included in the external signal;
a content transmission determination means that searches the content holder list in accordance with the terminal identifier, determines the content related to the unsearched content holder list as an unheld content, and outputs the unheld content as a transmitted content, with the terminal identifier as a destination terminal identifier; and
a content information transmission-reception means that creates, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as the transmission terminal identifier, and transmits the created message as a content information message to the neighboring communication terminal.

The present invention has been described with the aforementioned example embodiments as exemplary examples. However, the present invention is not limited to the aforementioned example embodiments. In other words, various embodiments that may be understood by a person skilled in the art may be applied to the present invention, within the scope thereo f.

This application claims priority based on Japanese Patent Application No. 2014-262061 filed on December 25, 2014, the disclosure of which is hereby incorporated by reference thereto in its entirety.

### Reference signs List

11, 12 Terminal
100, 200, 300, 400, 601, 602, 603, 604 Communication terminal
61, 62 Communication range
101, 201, 301, 401 Neighboring terminal detection unit
102,202,302,402 Content DB
103, 203, 303, 403 Content transmission determination unit
104, 204, 304, 404 Content holder management unit
105, 205, 305, 405 Content information transmission-reception unit
106, 206, 306, 406 Communication unit
207, 408 Content holder list transmission-reception unit
307, 407 Content request transmission-reception unit

## Claims

1. A communication terminal comprising:
a content DB that stores a content and a content holder list listing a content holder that holds the content, in a mutually associated manner;
neighboring terminal detection means that receives an external signal, detects a neighboring communication terminal, and outputs a terminal identifier of the neighboring communication terminal included in the external signal;
content transmission determination means that searches the content holder list in accordance with the terminal identifier, determines the content related to the unsearched content holder list as an unheld content, and outputs the unheld content as a transmitted content, with the terminal identifier as a destination terminal identifier; and
content information transmission-reception means that creates, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as the transmission terminal identifier, and transmits the created message as a content information message to the neighboring communication terminal.

2. The communication terminal according to Claim 1, further comprising
content holder list transmission-reception means that outputs the content holder list related to the transmitted content as a transmitted content holder list, wherein
the content information transmission-reception means,
when transmitting the content message, includes the transmitted content holder list in the content message.

3. The communication terminal according to Claim 1 or 2, wherein
the content information transmission-reception means,
when receiving the content list message, outputs the content list and the transmission terminal identifier respectively included in the content list message, and
further includes content request transmission-reception means that
selects a requested content identifier in accordance with a content identifier included in the content list, and
transmits a content request message requesting transmission of the content corresponding to the selected content identifier.

4. The communication terminal according to Claim 3, wherein
the content transmission determination means,
when the content request transmission-reception means receives the content request message, includes the content requested by the content request message in the transmitted content.

5. The communication terminal according to any one of Claims 1 to 4, further comprising
content holder management means that adds the destination terminal identifier to the content holder list related to the transmitted content, wherein
a timing of the content holder management means adding the destination terminal identifier of the transmitted content, to the content holder list, is
when transmitting the content message, or
when receiving, from the neighboring communication terminal, a confirmatory response message notifying reception completion of the content message.

6. The communication terminal according to Claim 5, wherein
the content information transmission-reception means,
when receiving the content message, outputs the transmitted content, the destination terminal identifier, and the transmission terminal identifier respectively included in the content message, and, when the content message includes the transmitted content holder list, further outputs the transmitted content holder list,
the content holder management means
adds the destination terminal identifier and the transmission terminal identifier to a content holder list related to the transmitted content, and, when the transmitted content holder list exists, further adds information contained in the transmitted content holder list, and
the content DB
stores the transmitted content and the added content holder list in a mutually associated manner.

7. A content delivery system comprising a plurality of the communication terminals according to any one of Claims 1 to 6.

8. The content delivery system according to Claim 7, wherein a communication technology between the communication terminals is DTN or epidemic routing.

9. A content delivery method comprising:
storing a content and a content holder list listing a content holder that holds the content, in a mutually associated manner, receiving an external signal, detecting a neighboring communication terminal, and outputting a terminal identifier of the neighboring communication terminal included in the external signal;
searching the content holder list in accordance with the terminal identifier, determining the content related to the unsearched content holder list as an unheld content, and outputting the unheld content as a transmitted content, with the terminal identifier as a destination terminal identifier; and
creating, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as the transmission terminal identifier, and transmitting the created message as a content information message to the neighboring communication terminal.

10. A recording medium recording a communication terminal control program causing a computer of a communication terminal including a content DB that stores a content and a content holder list listing a content holder that holds the content, in a mutually associated manner, to operate as:
neighboring terminal detection means that receives an external signal, detects a neighboring communication terminal, and outputs a terminal identifier of the neighboring communication terminal included in the external signal;
content transmission determination means that searches the content holder list in accordance with the terminal identifier, determines the content related to the unsearched content holder list as an unheld content, and outputs the unheld content as a transmitted content, with the terminal identifier as a destination terminal identifier; and
content information transmission-reception means that creates, in accordance with the determination result, a content message including the transmitted content and the destination terminal identifier, with a local terminal identifier as a transmission terminal identifier, or a content list message including a content list of the transmitted content and the destination terminal identifier, with the local terminal identifier as the transmission terminal identifier, and transmits the created message as a content information message to the neighboring communication terminal.
